# EUROPÄISCHE PATENTSCHRIFT

(11) **EP 3 416 996 B1**
(45) Veröffentlichungstag und Bekanntmachung des Hinweises auf die Patenterteilung: **08.04.2020**
(21) Anmeldenummer: 17704041.7
(22) Anmeldetag: 14.02.2017
(51) Int. Cl.: C08G 59/50, C08L 63/00, C08L 83/04

(54) **HÄRTBARE ZUSAMMENSETZUNG**
CURABLE COMPOSITION
COMPOSITION DURCISSABLE

(30) Priorität: 15.02.2016 EP 16155769
(43) Veröffentlichungstag der Anmeldung: 26.12.2018
(73) Patentinhaber: Sika Technology AG, 6340 Baar (CH)
(72) Erfinder: KASEMI, Edis, 8046 Zürich (CH); KRAMER, Andreas, 8006 Zürich (CH); STADELMANN, Ursula, 8046 Zürich (CH); BURCKHARDT, Urs, 8049 Zürich (CH); HÄBERLE, Hans, 78262 Gailingen (DE); KELCH, Steffen, 8102 Oberengstringen (CH)
(74) Vertreter: Sika Patent Attorneys
(86) Internationale Anmeldenummer: PCT/EP2017/053318
(87) Internationale Veröffentlichungsnummer: WO 2017/140688

(56) Entgegenhaltungen:
- EP-A1- 2 546 230
- EP-A1- 2 562 223

## Beschreibung

### Technisches Gebiet

Die Erfindung betrifft Aminhärter und härtbare Zusammensetzungen auf Basis einer Kombination aus Silangruppen-haltigem Polymer und Epoxidharz, sowie deren Verwendung als Klebstoff, Dichtstoff, Beschichtung, Vergussmasse oder Matrixharz.

### Stand der Technik

Als Beschichtungen und hochfeste Klebstoffe werden oft zweikomponentige Polyurethan-Systeme eingesetzt. Diese härten bei Umgebungstemperatur schnell aus und bilden ein zähelastisches Material von hoher Festigkeit, enthalten aber gesundheitsschädliche niedrigmolekulare Isocyanate und können beim Aushärten in feuchter Umgebung Blasen bilden. In gleicher Weise eingesetzt werden auch zweikomponentige Epoxidharz-Systeme. Diese erreichen sehr hohe Festigkeiten, sind aber nicht zähelastische oder elastisch, sondern hochsteif und relativ spröde und eignen sich somit nicht für Anwendungen, wo eine gewisse Dehnbarkeit erforderlich ist. Zudem enthalten sie oft gesundheitsschädliche Amine und sind in feuchter Umgebung empflindlich auf sogenannte Blushing-Effekte, was zu Einbussen bei der Oberflächenqualität, Haftung und Festigkeit führen kann. Aus der Anwendung als elastische Dicht- und Klebstoffe bekannt sind härtbare Massen auf Basis von silanfunktionellen Polymeren. Diese werden meist einkomponentig formuliert und vernetzen durch Reaktion mit Luftfeuchtigkeit. Sie zeichnen sich durch eine relativ geringe Toxizität, eine blasenfreie Aushärtung sowie hohe Haftkräfte aus, härten aber relativ langsam aus und erreichen nur geringe Festigkeiten. Dabei weisen sie eine geringe Weiterreissfestigkeit auf, sind also recht spröde. Ausserdem sind sie thermisch relativ unbeständig. Sie sind deshalb als Beschichtungen und hochfeste Klebstoffe wenig geeignet. Bekannt sind auch zweikomponentige Systeme auf Basis einer Kombination von silanfunktionellen Polymeren mit Epoxidharzen, beispielsweise aus EP 2 562 223, EP 0 186 191 und EP 0 370 464. Solche Systeme erreichen eine höhere Festigkeit und Zähigkeit sowie Wärmebeständigkeit als jene auf Basis von silanfunktionellen Polymeren alleine, sind aber noch verbesserungsfähig. Die bekannten Systeme enthalten zur Aushärtung des Epoxidharzes niedrigmolekulare Amine oder Mannich-Basen. Dies verleiht ihnen einen erhöhte Toxizität und einen ausgeprägten, unangenehmen Amingeruch. Weiterhin neigen sie bei Applikation in der Kälte und/oder bei hoher Luftfeuchtigkeit zu Aushärtungsstörungen, welche durch Salzbildung (Carbamatisierung) der enthaltenen Amine mit CO₂ (sogenanntes Blushing) bedingt sind und sich insbesondere in Form von reduzierter Endhärte äussern. Ausserdem haben sie eine relativ hohe Viskosität und sind deshalb ohne den Einsatz von Verdünnern, welche zu erhöhter Emission führen, nicht leicht verarbeitbar.

### Darstellung der Erfindung

Aufgabe der vorliegenden Erfindung ist es, eine härtbare Masse bereitzustellen, die geruchsarm, wenig toxisch und gut verarbeitbar ist und emissionsarme Produkte ermöglicht, die bei Umgebungstemperatur rasch aushärten und dabei makroskopisch homogene Filme bzw. Körper mit hoher Festigkeit und Dehnbarkeit bilden.
Überraschenderweise wird diese Aufgabe durch eine Zusammensetzung wie in Anspruch 1 beschrieben gelöst. Die Zusammensetzung zeichnet sich durch einen geringen Geruch und eine niedrige Toxizität aus. Sie ist niedrigviskos und neigt kaum zum Carbamatisieren bzw. zu Blushing-Effekten. Als zweikomponentige Zusammensetzung ist sie lange lagerfähig und härtet nach dem Vermischen schnell und ohne Blasenbildung zu einem elastischen Polymer mit hoher Festigkeit aus, das in der Hitze und gegenüber UV-Strahlung sehr beständig ist. Diese Kombination von Eigenschaften ermöglicht emissionsarme Produkte, welche einfach appliziert und verarbeitet werden können, auch in feuchter oder kühler Umgebung schnell aushärten und dabei mechanisch hochbelastbare Kunststoffe mit schöner Oberfläche bilden, welche thermisch stabil sind, wobei die mechnischen Eigenschaften von sehr elastisch mit nicht allzu hohem Elastizitätsmodul und hoher Festigkeit bis zu zähelastisch mit sehr hohem Elastizitätsmodul und sehr hoher Festigkeit einstellbar sind. Die Zusammensetzung ist insbesondere auch dann vorteilhaft, wenn aus Gründen des Arbeits- und Gesundheitsschutzes isocyanatfreie Produkte eingesetzt werden sollen.

Überraschend an der erfindungsgemässen Zusammensetzung sind die guten mechanischen Eigenschaften, insbesondere die hohe Festigkeit und die hohe Dehnung, die niedrige Viskosität und die schöne, nicht-klebrige Oberfläche. Durch die niedrige Viskosität wird eine besonders gute Verarbeitbarkeit der Zusammensetzung ermöglicht.
Die erfindungsgemässe Zusammensetzung ist besonders geeignet als Klebstoff, Dichtstoff, Beschichtung, Vergussmasse oder Matrixharz in der Bau- und Fertigungsindustrie.
Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der Erfindung ist eine Zusammensetzung umfassend
- mindestens ein Silangruppen-haltiges Polymer,
- mindestens ein Epoxidharz und
- mindestens ein Amin der Formel (I), 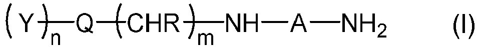 wobei
   A für einen Alkylen-Rest mit 2 bis 15 C-Atomen, welcher gegebenenfalls ein oder mehrere Stickstoffatome enthält, steht,
   R unabhängig voneinander für einen Wasserstoff- oder Methyl- oder Phenyl-Rest steht,
   Q für einen fünf-, sechs- oder siebengliedrigen, im Ring gegebenenfalls ein Sauerstoff-, Schwefel- oder Stickstoffatom aufweisenden Cycloalkyl- oder Aryl-Rest mit 4 bis 7 C-Atomen steht,
   Y für gleiche oder verschiedene Reste ausgewählt aus der Gruppe bestehend aus Alkyl, Alkoxy und Dialkylamino mit 1 bis 18 C-Atomen steht,
   m für 1 oder 2 steht und
   n für 0 oder 1 oder 2 oder 3 steht.

Im vorliegenden Dokument bezeichnet der Begriff "Alkoxysilangruppe" oder kurz "Silangruppe" eine an einen organischen Rest gebundene Silylgruppe mit einem bis drei, insbesondere zwei oder drei, hydrolysierbaren Alkoxy-Resten am Silicium-Atom.
Entsprechend bezeichnet der Begriff "Organosilan" oder kurz "Silan" eine organische Verbindung, welche mindestens eine Silangruppe aufweist.
Als "Aminosilan", "Mercaptosilan", "Hydroxysilan" bzw. "Isocyanatosilan" werden Organosilane bezeichnet, die am organischen Rest zusätzlich zur Silangruppe eine oder mehrere Amino-, Mercapto-, Hydroxyl- bzw. Isocyanatgruppen aufweisen.
Der Begriff "Silangruppen-haltiger Polyether" umfasst auch Silangruppen-haltige Polymere, welche zusätzlich zu Polyether-Einheiten auch Urethangruppen, Harnstoffgruppen oder Thiourethangruppen enthalten können. Solche Silangruppen-haltige Polyether werden auch als "Silangruppen-haltige Polyurethane" bezeichnet.
Mit "Poly" beginnende Substanznamen wie Polyol oder Polyisocyanat bezeichnen Substanzen, die formal zwei oder mehr der in ihrem Namen vorkommenden funktionellen Gruppen pro Molekül enthalten.
Als "primäre Aminogruppe" wird eine Aminogruppe bezeichnet, die an einen einzigen organischen Rest gebunden ist und zwei Wasserstoffatome trägt; als "sekundäre Aminogruppe" wird eine Aminogruppe bezeichnet, die an zwei organische Reste, welche auch gemeinsam Teil eines Rings sein können, gebunden ist und ein Wasserstoffatom trägt; und als "tertiäre Aminogruppe" wird eine Aminogruppe bezeichnet, die an drei organische Reste, welche auch zu zweit oder zu dritt Teil eines oder mehrerer Ringe sein können, gebunden ist und kein Wasserstoffatom trägt.
Als "aliphatisches" wird ein Amin bzw. Polyamin bezeichnet, dessen Aminogruppen an einen aliphatischen oder cycloaliphatischen oder arylaliphatischen Rest gebunden sind.
Als "Aminwasserstoff" werden die Wasserstoffatome von primären und sekundären Aminogruppen bezeichnet.

Als "Aminwasserstoff-Equivalentgewicht" wird die Masse eines Amins oder einer Amin-haltigen Zusammensetzung, die ein Molequivalent Aminwasserstoff enthält, bezeichnet.
Als "Molekulargewicht" wird die molare Masse (in Gramm pro Mol) eines Moleküls bezeichnet. Als "mittleres Molekulargewicht" wird das Zahlenmittel Mₙ einer oligomeren oder polymeren Mischung von Molekülen bezeichnet, welches üblicherweise mittels Gelpermeationschromatographie (GPC) gegen Polystyrol als Standard bestimmt wird.
Als "Viskosität" wird die dynamische Viskosität oder Scherviskosität bezeichnet, welche durch das Verhältnis zwischen der Schubspannung und der Scherrate (Geschwindigkeitsgefälle) definiert ist und wie in den Ausführungsbeispielen beschrieben bestimmt wird.
Als "lagerstabil" oder "lagerfähig" wird eine Substanz oder eine Zusammensetzung bezeichnet, wenn sie bei Raumtemperatur in einem geeigneten Gebinde während längerer Zeit, typischerweise mindestens 3 Monaten bis zu 6 Monaten und mehr, aufbewahrt werden kann, ohne dass sie sich in ihren Anwendungs- oder Gebrauchseigenschaften durch die Lagerung in einem für ihren Gebrauch relevanten Ausmass verändert.
Die Abkürzung "VOC" steht für "volatile organic compounds", also flüchtige organische Substanzen, welche einen Dampfdruck von mindestens 0.01 kPa bei 293.14 K aufweisen.
Als "Lösemittel" wird eine das Silangruppen-haltige Polymer und/oder das Epoxidharz lösende Flüssigkeit bezeichnet, welche ein VOC ist und keine gegenüber Silan- oder Epoxidgruppen reaktive Gruppen enthält.
Eine gestrichelte Linie in den Formeln in diesem Dokument stellt jeweils die Bindung zwischen einem Substituenten und dem zugehörigen Molekülrest dar. Als "Raumtemperatur" wird eine Temperatur von 23 °C bezeichnet.

Die Zusammensetzung umfasst mindestens ein Silangruppen-haltiges Polymer.
Dieses ist bevorzugt ein Silangruppen-haltiges organisches Polymer, insbesondere ein Polyolefin, Poly(meth)acrylat oder Polyether oder eine Mischform dieser Polymere, welches jeweils eine oder bevorzugt mehrere Silangruppen trägt. Die Silangruppen können seitlich in der Kette oder endständig sein.

Insbesondere ist das Silangruppen-haltige Polymer ein Silangruppen-haltiger Polyether. Dieser weist bevorzugt mehrheitlich Oxyalkylen-Einheiten, insbesondere 1,2-Oxypropylen-Einheiten, auf.

Das Silangruppen-haltige Polymer ist bevorzugt bei Raumtemperatur flüssig.

Das Silangruppen-haltige Polymer weist im Mittel bevorzugt 1.3 bis 4, insbesondere 1.5 bis 3, besonders bevorzugt 1.7 bis 2.8, Silangruppen pro Molekül auf. Die Silangruppen sind bevorzugt endständig.

Bevorzugte Silangruppen sind Trimethoxysilangruppen, Dimethoxymethylsilangruppen oder Triethoxysilangruppen.

Das Silangruppen-haltige Polymer weist bevorzugt ein mittleres Molekulargewicht, bestimmt mittels GPC gegenüber Polystyrol-Standard, im Bereich von 1'000 bis 30'000 g/mol, insbesondere von 2'000 bis 20'000 g/mol, auf.

Das Silangruppen-haltige Polymer enthält bevorzugt Endgruppen der Formel (II), 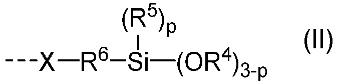 wobei
p für einen Wert von 0 oder 1 oder 2, bevorzugt für 0 oder 1, insbesondere für 0, steht,
R⁴ für einen linearen oder verzweigten, einwertigen Kohlenwasserstoffrest mit 1 bis 5 C-Atomen steht,
R⁵ für einen linearen oder verzweigten, einwertigen Kohlenwasserstoffrest mit 1 bis 8 C-Atomen, insbesondere für Methyl oder für Ethyl, steht,
R⁶ für einen linearen oder verzweigten, zweiwertigen Kohlenwasserstoffrest mit 1 bis 12 C-Atomen, welcher gegebenenfalls cyclische und/oder aromatische Anteile und gegebenenfalls ein oder mehrere Heteroatome, insbesondere ein oder mehrere Stickstoffatome, aufweist, steht,
X für einen zweiwertigen Rest ausgewählt aus --O-, --S-, --N(R⁷)-, --N(R⁷)-CO-, --O-CO-N(R⁷)-, --N(R⁷)-CO-O-, --N(R⁷)-CO-N(R⁷)-, --N(R⁷)-CO-O-CH(CH₃)-CO-N(R⁷)-, --N(R⁷)-CO-O-CH(R⁸)-CH₂-CH₂-CO-N(R⁷)- und --N(R⁷)-CO-O-CH(CH₃)-CH₂-O-CO-N(R⁷)-steht,
   wobei
   R⁷ für ein Wasserstoffatom oder für einen linearen oder verzweigten Kohlenwasserstoff-Rest mit 1 bis 20 C-Atomen, welcher gegebenenfalls cyclische Anteile aufweist, und welcher gegebenenfalls eine Alkoxysilylgruppe oder Ether- oder Carbonsäureestergruppen aufweist, steht, und R⁸ für einen unverzweigten Alkyl-Rest mit 1 bis6 C-Atomen, insbesondere für Methyl, steht.

Bevorzugt steht R⁴ für Methyl oder für Ethyl oder für Isopropyl.
Besonders bevorzugt steht R⁴ für Methyl. Solche Silangruppen-haltige Polymere sind besonders reaktiv.
Weiterhin besonders bevorzugt steht R⁴ für Ethyl. Solche Silangruppen-haltige Polymere sind besonders lagerstabil und toxikologisch vorteilhaft.
Bevorzugt steht R⁵ für Methyl.
Bevorzugt steht R⁶ für 1,3-Propylen oder für 1,4-Butylen, wobei Butylen mit einer oder zwei Methylgruppen substituiert sein kann.
Besonders bevorzugt steht R⁶ für 1,3-Propylen.

Verfahren zur Herstellung von Silangruppen-haltigen Polyethern sind dem Fachmann bekannt.
In einem Verfahren sind Silangruppen-haltige Polyether erhältlich aus der Umsetzung von Allylgruppen-haltigen Polyethern mit Hydrosilanen (Hydrosilylierung), gegebenenfalls unter Kettenverlängerung mit beispielsweise Diisocyanaten.

In einem weiteren Verfahren sind Silangruppen-haltige Polyether erhältlich aus der Copolymerisation von Alkylenoxiden und Epoxysilanen, gegebenenfalls unter Kettenverlängerung mit beispielsweise Diisocyanaten.
In einem weiteren Verfahren sind Silangruppen-haltige Polyether erhältlich aus der Umsetzung von Polyetherpolyolen mit Isocyanatosilanen, gegebenenfalls unter Kettenverlängerung mit Diisocyanaten.
In einem weiteren Verfahren sind Silangruppen-haltige Polyether erhältlich aus der Umsetzung von Isocyanatgruppen-haltigen Polyethern, insbesondere NCO-terminierten Urethan-Polyethern aus der Umsetzung von Polyetherpolyolen mit einer überstöchiometischen Menge an Polyisocyanaten, mit Aminosilanen, Hydroxysilanen oder Mercaptosilanen. Silangruppen-haltige Polyether aus diesem Verfahren sind besonders bevorzugt. Dieses Verfahren ermöglicht den Einsatz einer Vielzahl von kommerziell gut verfügbaren, kostengünstigen Ausgangsmaterialien, womit unterschiedliche Polymereigenschaften erhalten werden können, beispielsweise eine hohe Dehnbarkeit, eine hohe Festigkeit, eine tiefe Glasübergangstemperatur oder eine hohe Hydrolysebeständigkeit.

Bevorzugte Silangruppen-haltige Polyether sind erhältlich aus der Umsetzung von NCO-terminierten Urethan-Polyethern mit Aminosilanen oder Hydroxysilanen. Dafür geeignete NCO-terminierte Urethan-Polyether sind erhältlich aus der Umsetzung von Polyetherpolyolen, insbesondere Polyoxyalkylendiolen oder Polyoxyalkylentriolen, bevorzugt Polyoxypropylendiolen oder Polyoxypropylentriolen, mit einer überstöchiometrischen Menge an Polyisocyanaten, insbesondere Diisocyanaten.
Bevorzugt wird die Umsetzung zwischen dem Polyisocyanat und dem Polyetherpolyol unter Feuchtigkeitsausschluss bei einer Temperatur von 50 °C bis 160 °C durchgeführt, gegebenenfalls in Anwesenheit geeigneter Katalysatoren, wobei das Polyisocyanat so dosiert ist, dass dessen Isocyanatgruppen im Verhältnis zu den Hydroxylgruppen des Polyols im stöchiometrischen Überschuss vorhanden sind. Insbesondere wird der Überschuss an Polyisocyanat so gewählt, dass im resultierenden Urethan-Polyether nach der Umsetzung aller Hydroxylgruppen ein Gehalt an freien Isocyanatgruppen im Bereich von 0.1 bis 10 Gewichts-%, bevorzugt 0.2 bis 5 Gewichts-%, besonders bevorzugt 0.3 bis 3 Gewichts-%, bezogen auf das gesamte Polymer verbleibt.
Bevorzugte Diisocyanate sind ausgewählt aus der Gruppe bestehend aus 1,6-Hexamethylendiisocyanat (HDI), 1-Isocyanato-3,3,5-trimethyl-5-isocyanatomethyl-cyclohexan (=Isophorondiisocyanat oder IPDI), 2,4- und 2,6-Toluylendiisocyanat und beliebige Gemische dieser Isomeren (TDI) und 4,4'-, 2,4'- und 2,2'-Diphenylmethandiisocyanat und beliebige Gemische dieser Isomeren (MDI). Besonders bevorzugt sind IPDI oder TDI. Meist bevorzugt ist IPDI. Damit werden Silangruppen-haltige Polyether mit besonders guter Lichtechtheit erhalten.

Speziell geeignet als Polyetherpolyole sind Polyoxyalkylendiole oder Polyoxyalkylentriole mit einem Ungesättigtheitsgrad tiefer als 0.02 mEq/g, insbesondere tiefer als 0.01 mEq/g, und einem mittleren Molekulargewicht im Bereich von 400 bis 25'000 g/mol, insbesondere 1'000 bis 20'000 g/mol.
Neben Polyetherpolyolen können anteilig auch andere Polyole eingesetzt werden, insbesondere Polyacrylatpolyole oder Polyesterpolyole, sowie niedrigmolekulare Diole oder Triole.

Geeignete Aminosilane für die Umsetzung mit einem NCO-terminierten Urethan-Polyether sind primäre oder sekundäre Aminosilane. Bevorzugt sind 3-Aminopropyltrimethoxysilan, 3-Aminopropyldimethoxymethylsilan, 4-Aminobutyl-trimethoxysilan, 4-Amino-3-methylbutyl-trimethoxysilan, 4-Amino-3,3-dimethylbutyl-trimethoxysilan, N-Butyl-3-aminopropyltrimethoxysilan, N-Phenyl-3-aminopropyltrimethoxysilan, Addukte aus primären Aminosilanen wie 3-Aminopropyltrimethoxysilan, 3-Aminopropyldimethoxymethylsilan oder N-(2-Aminoethyl)-3-aminopropyltrimethoxysilan und Michael-Akzeptoren wie Acrylnitril, (Meth)acrylsäureestern, (Meth)acrylsäureamiden, Maleinsäure- oder Fumarsäurediestern, Citraconsäurediestern oder Itaconsäurediestern, insbesondere N-(3-Trimethoxysilylpropyl)aminobernsteinsäuredimethyl- oder -diethylester. Ebenfalls geeignet sind Analoga der genannten Aminosilane mit Ethoxy- oder Isopropoxygruppen anstelle der Methoxygruppen am Silicium.

Geeignete Hydroxysilane für die Umsetzung mit einem NCO-terminierten Urethan-Polyether sind insbesondere erhältlich aus der Addition von Aminosilanen an Lactone, Lactide oder an cyclische Carbonate.
Bevorzugte Hydroxysilane dieser Art sind N-(3-Triethoxysilylpropyl)-2-hydroxypropanamid, N-(3-Trimethoxysilylpropyl)-2-hydroxypropanamid, N-(3-Triethoxysilylpropyl)-4-hydroxypentanamid, N-(3-Triethoxysilylpropyl)-4-hydroxyoctanamid, N-(3-Triethoxysilylpropyl)-5-hydroxydecanamid oder N-(3-Triethoxysilylpropyl)-2-hydroxypropylcarbamat.

Weitere geeignete Hydroxysilane sind erhältlich aus der Addition von Aminosilanen an Epoxide oder aus der Addition von Aminen an Epoxysilane. Bevorzugte Hydroxysilane dieser Art sind 2-Morpholino-4(5)-(2-trimethoxysilylethyl)cyclohexan-1-ol, 2-Morpholino-4(5)-(2-triethoxysilylethy-1-ol oder 1-Morpholino-3-(3-(triethoxysilyl)propoxy)propan-2-ol.

Als Silangruppen-haltige Polyether sind auch kommerziell erhältliche Produkte geeignet, insbesondere die Folgenden: MS Polymer™ (von Kaneka Corp., insbesondere die Typen S203H, S303H, S227, S810, MA903 und S943), MS Polymer™ bzw. Silyl™ (von Kaneka Corp., insbesondere die Typen SAT010, SAT030, SAT200, SAX350, SAX400, SAX725, MAX450, MAX951), Excestar® (von Asahi Glass Co. Ltd., insbesondere die Typen S2410, S2420, S3430, S3630), SPUR+* (von Momentive Performance Materials, insbesondere die Typen 1010LM, 1015LM, 1050MM), Vorasil™ (von Dow Chemical Co., insbesondere die Typen 602 und 604), Desmoseal® (von Covestro, insbesondere die Typen S XP 2458, S XP 2636, S XP 2749, S XP 2774 und S XP 2821), TEGOPAC® (von Evonik Industries AG, insbesondere die Typen Seal 100, Bond 150, Bond 250), Polyvest® (von Evonik, insbesondere die Typen EP ST-M und EP ST-E), Polymer ST (von Hanse Chemie AG/Evonik Industries AG, insbesondere die Typen 47, 48, 61, 61LV, 77, 80, 81); Geniosil® STP (von Wacker Chemie AG,insbesondere die Typen E10, E15, E30, E35) oder Arufon (von Toagosei, insbesondere die Typen US-6100 oder US-6170).

Bevorzugt weist die Zusammensetzung einen Gehalt an Silangruppen-haltigem Polymer im Bereich von 5 bis 80 Gewichts-%, besonders bevorzugt im Bereich von 10 bis 75 Gewichts-%, insbesondere im Bereich von 15 bis 70 Gewichts-%, auf.

Die Zusammensetzung umfasst weiterhin mindestens ein Epoxidharz.
Als Epoxidharz geeignet sind übliche technische Epoxidharze. Diese werden auf bekannte Art und Weise erhalten, zum Beispiel aus der Oxidation der entsprechenden Olefine oder aus der Reaktion von Epichlorhydrin mit den entsprechenden Polyolen, Polyphenolen oder Aminen.
Als Epoxidharz besonders geeignet sind sogenannte Polyepoxid-Flüssigharze, im folgenden als "Flüssigharz" bezeichnet. Diese weisen eine Glasübergangstemperatur unterhalb von 25°C auf.
Ebenfalls möglich als Epoxidharz sind sogenannte Festharze, welche eine Glasübergangstemperatur oberhalb von 25°C aufweisen und sich zu bei 25°C schüttfähigen Pulvern zerkleinern lassen.

Geeignete Epoxidharze sind insbesondere aromatische Epoxidharze, insbesondere die Glycidylisierungsprodukte von:
- Bisphenol-A, Bisphenol-F oder Bisphenol-A/F, wobei A für Aceton und F für Formaldehyd steht, welche als Edukte zur Herstellung dieser Bisphenole dienten. Im Fall von Bisphenol-F können auch Stellungsisomere vorhanden sein, insbesondere abgeleitet von 2,4'- oder 2,2'-Hydroxyphenylmethan.
- Dihydroxybenzol-Derivaten wie Resorcin, Hydrochinon oder Brenzkatechin;
- weiteren Bisphenolen oder Polyphenolen wie Bis(4-hydroxy-3-methylphenyl)methan, 2,2-Bis(4-hydroxy-3-methylphenyl)propan (Bisphenol-C), Bis-(3,5-dimethyl-4-hydroxyphenyl)methan, 2,2-Bis(3,5-dimethyl-4-hydroxyphenyl)propan, 2,2-Bis(3,5-dibromo-4-hydroxyphenyl)propan, 2,2-Bis(4-hydroxy-3-tert.butylphenyl)propan, 2,2-Bis(4-hydroxyphenyl)butan (Bisphenol-B), 3,3-Bis(4-hydroxyphenyl)pentan, 3,4-Bis(4-hydroxyphenyl)hexan, 4,4-Bis(4-hydroxyphenyl)heptan, 2,4-Bis(4-hydroxyphenyl)-2-methylbutan, 2,4-Bis-(3,5-dimethyl-4-hydroxyphenyl)-2-methylbutan, 1,1-Bis(4-hydroxyphenyl)-cyclohexan (Bisphenol-Z), 1,1-Bis(4-hydroxyphenyl)-3,3,5-trimethylcyclohexan (Bisphenol-TMC), 1,1-Bis(4-hydroxyphenyl)-1-phenylethan, 1,4-Bis[2-(4-hydroxyphenyl)-2-propyl]benzol (Bisphenol-P), 1,3-Bis[2-(4-hydroxyphenyl)-2-propyl]benzol (Bisphenol-M), 4,4'-Dihydroxydiphenyl (DOD), 4,4'-Dihydroxybenzophenon, Bis(2-hydroxynaphth-1-yl)methan, Bis(4-hydroxynaphth-1-yl)methan, 1,5-Dihydroxynaphthalin, Tris(4-hydroxyphenyl)methan, 1,1,2,2-Tetrakis(4-hydroxyphenyl)ethan, Bis(4-hydroxyphenyl)ether oder Bis(4-hydroxyphenyl)sulfon;
- Kondensationsprodukten von Phenolen mit Formaldehyd, die unter sauren Bedingungen erhalten werden, wie Phenol-Novolaken oder Kresol-Novolaken, auch Bisphenol-F-Novolake genannt;
- aromatischen Aminen, wie Anilin, Toluidin, 4-Aminophenol, 4,4'-Methylendiphenyldiamin, 4,4'-Methylendiphenyldi-(N-methyl)amin, 4,4'-[1,4-Phenylen-bis(1-methylethyliden)]bisanilin (Bisanilin-P) oder 4,4'-[1,3-Phenylen-bis(1-methylethyliden)]bisanilin (Bisanilin-M).

Weitere geeignete Epoxidharze sind aliphatische oder cycloaliphatische Polyepoxide, insbesondere
- Glycidylether von gesättigten oder ungesättigten, verzweigten oder unverzweigten, cyklischen oder offenkettigen di-, tri- oder tetrafunktionellen C₂- bis C₃₀-Alkoholen, insbesondere Ethylenglykol, Propylenglykol, Butylenglykol, Hexandiol, Octandiol, Polypropylenglykolen, Dimethylolcyclohexan, Neopentylglykol, Dibromoneopentylglykol, Rizinusöl, Trimethylolpropan, Trimethylolethan, Pentaerythrol, Sorbit oder Glycerin, oder alkoxyliertes Glycerin oder alkoxyliertes Trimethylolpropan;
- ein hydriertes Bisphenol-A-, -F- oder -A/F-Flüssigharz, beziehungsweise die Glycidylisierungsprodukte von hydriertem Bisphenol-A, -F oder -A/F;
- ein N-Glycidylderivat von Amiden oder heterocyclischen Stickstoffbasen, wie Triglycidylcyanurat oder Triglycidylisocyanurat, oder Umsetzungsprodukte von Epichlorhydrin mit Hydantoin.
- Epoxidharze aus der Oxidation von Olefinen, wie insbesondere Vinylcylohexen, Dicyclopentadien, Cyclohexadien, Cyclododecadien, Cyclododecatrien, Isopren, 1,5-Hexadien, Butadien, Polybutadien oder Divinylbenzol.

Als Epoxidharz bevorzugt ist ein Flüssigharz.
Als Epoxidharz besonders bevorzugt ist ein Flüssigharz auf der Basis eines Bisphenols.
Als Epoxidharz am meisten bevorzugt ist ein Flüssigharz auf der Basis eines Bisphenol-A-, Bisphenol-F- oder Bisphenol-A/F-Diglycidylethers, wie sie kommerziell beispielsweise von Dow, Huntsman oder Momentive erhältlich sind. Diese Epoxidharze weisen eine gut handhabbare Viskosität auf und ermöglichen hohe Festigkeiten und Beständigkeiten. Solche Flüssigharze können auch Anteile von Bisphenol A-Festharz oder Phenol-Novolaken enthalten.

Bevorzugt weist die Zusammensetzung einen Gehalt an Epoxidharz im Bereich von 15 bis 70 Gewichts-%, besonders bevorzugt 20 bis 65 Gewichts-%, insbesondere 25 bis 65 Gewichts-%, auf. Eine solche Zusammensetzung weist eine hohe Festigkeit bei guter Dehnbarkeit auf.

Die Zusammensetzung umfasst weiterhin mindestens ein Amin der Formel (I).

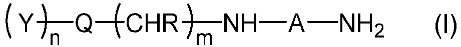

A ist bevorzugt ausgewählt aus der Gruppe bestehend aus 1,2-Ethylen, 1,2-Propylen, 1,3-Propylen, 2-Methyl-1,5-pentylen, 1,6-Hexylen, 2,2(4),4-Trimethyl-1,6-hexylen, 1,3-Cyclohexylen-bis(methylen), 1,3-Phenylen-bis(methylen), (1,5,5-Trimethylcyclohexan-1-yl)methan-1,3, 3-Aza-1,5-pentylen, 3,6-Diaza-1,8-octylen, 3,6,9-Triaza-1,11-undecylen, 4-Aza-1,7-heptylen, 3-Aza-1,6-hexylen, 4,7-Diaza-1,10-decylen und 7-Aza-1,13-tridecylen.

Davon bevorzugt ist 1,2-Propylen. Diese Amine neigen besonders wenig zum Carbamatisieren und ermöglichen hohe Festigkeiten und besonders hohe Dehnungen.

Davon weiterhin bevorzugt ist 1,3-Phenylen-bis(methylen). Diese Amine neigen wenig zum Carbamatisieren und ermöglichen besonders hohe Festigkeiten.

Bevorzugt steht R unabhängig voneinander für einen Wasserstoff-Rest oder für Methyl, insbesondere jeweils für einen Wasserstoff-Rest. Diese Amine sind besonders einfach zugänglich und besonders niedrigviskos.

Bevorzugt steht Q für einen gegebenenfalls mit Y substituierten Phenyl-Rest. Diese Amine neigen besonders wenig zum Carbamatisieren.

Y steht bevorzugt für gleiche oder verschiedene Reste ausgewählt aus der Gruppe bestehend aus Alkyl, Alkoxy und Dialkylamino mit jeweils 1 bis 12, insbesondere 1 bis 4, C-Atomen. Besonders bevorzugt steht Y für Methyl oder für Methoxy oder für Dimethylamino. Ganz besonders bevorzugt steht Y für Methoxy oder für Dimethylamino.
Bevorzugt steht der Rest Y in meta- und/oder para-Stellung. Im Fall von n=1 steht der Rest Y insbesondere in para-Stellung.

n steht bevorzugt für 0 oder 1 oder 2, insbesondere für 0 oder 1.
Besonders bevorzugt steht n für 0. Diese Amine ermöglichen eine besonders gute Verarbeitbarkeit.

Für den Fall, dass n für 1 steht, steht Q insbesondere für einen mit Y substituierten Phenyl-Rest und Y steht insbesondere für Methoxy oder für Dimethylamino.

Besonders bevorzugt stehen A für 1,2-Propylen, R für einen Wasserstoff-Rest, Q für einen Phenyl-Rest, m für 1 und n für 0. Diese Amine ermöglichen eine ganz besonders gute Verarbeitbarkeit, eine hohe Festigkeit und eine besonders hohe Dehnung.

Weiterhin besonders bevorzugt stehen A für 1,3-Phenylen-bis(methylen), R für einen Wasserstoff-Rest, Q für einen Phenyl-Rest, m für 1 und n für 0. Dieses Amin ermöglicht eine besonders gute Verarbeitbarkeit und eine besonders hohe Festigkeit.

Weiterhin besonders bevorzugt stehen A für 1,3-Phenylen-bis(methylen), R jeweils für einen Wasserstoff-Rest, Q für einen Phenyl-Rest, m für 2 und n für 0. Dieses Amin ermöglicht eine besonders gute Verarbeitbarkeit und eine besonders hohe Festigkeit. Dieses Amin ist als Bestandteil von Gaskamine® 240 (von Mitsubishi Gas Chemical) kommerziell erhältlich.

Das Amin der Formel (I) ist bevorzugt ausgewählt aus der Gruppe bestehend aus N-Benzyl-1,2-ethandiamin, N-(4-Methoxybenzyl)-1,2-ethandiamin, N-(4-(Dimethylamino)benzyl)-1,2-ethandiamin, N¹-Benzyl-1,2-propandiamin oder N²-Benzyl-1,2-propandiamin oder ein Gemisch dieser Isomeren, N¹-(4-Methoxybenzyl)-1,2-propandiamin oder N²-(4-Methoxybenzyl)-1,2-propandiamin oder ein Gemisch dieser Isomeren, N¹-(4-(Dimethylamino)benzyl)-1,2-propandiamin oder N²-(4-(Dimethylamino)benzyl)-1,2-propandiamin oder ein Gemisch dieser Isomeren, N-Benzyl-1,3-bis(aminomethyl)benzol und N-Phenylethyl-1,3-bis-(aminomethyl)benzol.

Davon bevorzugt ist N¹-Benzyl-1,2-propandiamin oder N²-Benzyl-1,2-propandiamin oder ein Gemisch dieser Isomeren. Diese Amine sind insbesondere erhältlich aus der reduktiven Alkylierung von 1,2-Propylendiamin mit Benzaldehyd und Wasserstoff. Sie werden insbesondere eingesetzt als mittels Destillation gereinigtes Reaktionsprodukt.

Davon weiterhin bevorzugt ist N-Benzyl-1,3-bis(aminomethyl)benzol. Dieses Amin ist insbesondere erhältlich aus der reduktiven Alkylierung von 1,3-Bis-(aminomethyl)benzol mit Benzaldehyd und Wasserstoff. Es wird insbesondere eingesetzt als Reaktionsprodukt enthaltend Anteile von N,N'-Dibenzyl-1,3-bis-(aminomethyl)benzol.

Davon weiterhin bevorzugt ist N-Phenylethyl-1,3-bis(aminomethyl)benzol. Dieses ist insbesondere erhältlich aus der Umsetzung von 1,3-Bis(aminomethyl)-benzol mit Styrol. Es wird insbesondere eingesetzt als Bestandteil des kommerziell erhältlichen Gaskamine® 240 (von Mitsubishi Gas Chemical).

Die bevorzugten Amine der Formel (I) zeichnen sich durch besonders gute Zugänglichkeit, besonders niedrige Viskosität und gute Eigenschaften in der erfindungsgemässen Verwendung aus.

Bevorzugt weist die Zusammensetzung einen Gehalt an Amin der Formel (I) im Bereich von 1 bis 35 Gewichts-%, besonders bevorzugt im Bereich von 2 bis 30 Gewichts-%, auf.

Die Zusammensetzung enthält bevorzugt soviel an Amin der Formel (I), dass die Anzahl Aminwasserstoffe des Amins der Formel (I) 25 bis 150%, insbesondere 30 bis 130%, der Anzahl enthaltener Epoxidgruppen entspricht.

In der Zusammensetzung liegt das Gewichtsverhältnis zwischen dem silanfunktionellen Polymer und dem Epoxidharz bevorzugt im Bereich von 10:90 bis 90:10, besonders bevorzugt im Bereich von 20:80 bis 80:20, insbesondere im Bereich von 25:75 bis 75:25.

Die Zusammensetzung enthält bevorzugt weiterhin mindestens ein Aminosilan oder Epoxysilan oder Mercaptosilan.

Ein geeignetes Epoxysilan ist insbesondere 3-Glycidoxypropyltrimethoxysilan oder 3-Glycidoxypropyldimethoxymethylsilan oder 3-Glycidoxypropyltriethoxysilan.

Ein geeignetes Mercaptosilan ist insbesondere 3-Mercaptopropyltrimethoxysilan oder 3-Mercaptopropyldimethoxymethylsilan oder 3-Mercaptopropyltriethoxysilan.

Besonders bevorzugt enthält die Zusammensetzung mindestens ein Aminosilan.
Ein geeignetes Aminosilan ist insbesondere ausgewählt aus der Gruppe bestehend aus 3-Aminopropyltrimethoxysilan, N-(2-Aminoethyl)-3-aminopropyltrimethoxysilan, 3-Amino-2-methylpropyltrimethoxysilan, 4-Aminobutyltrimethoxysilan, 4-Amino-3,3-dimethylbutyltrimethoxysilan, 3-Aminopropyldimethoxymethylsilan, N-(2-Aminoethyl)-3-aminopropyldimethoxymethylsilan und N-(2-Aminoethyl)-N'-[3-(trimethoxysilyl)propyl]ethylendiamin, sowie deren Analoga mit Ethoxygruppen anstelle der Methoxygruppen am Silicium.
Davon besonders bevorzugt ist 3-Aminopropyltrimethoxysilan, 3-Aminopropyltriethoxysilan, N-(2-Aminoethyl)-3-aminopropyltrimethoxysilan oder N-(2-Aminoethyl)-3-aminopropyltriethoxysilan.

Bevorzugt weist die Zusammensetzung einen Gehalt an Aminosilan im Bereich von 0.1 bis 10 Gewichts-%, insbesondere im Bereich von 0.2 bis 7 Gewichts-%, auf. Solche Zusammensetzungen weisen eine hohe Festigkeit auf.
Ein hoher Gehalt an Aminosilan ermöglicht ein besonders hohes Elastizitätsmodul und besonders hohe Festigkeiten.

Die Zusammensetzung ist bevorzugt eine zweikomponentige Zusammensetzung bestehend aus einer ersten und einer zweiten Komponente, welche voneinander getrennt herstellt, verpackt und gelagert werden, wobei das Amin der Formel (I) nicht in der gleichen Komponente wie das Epoxidharz vorliegt.
Ein gegebenenfalls vorhandenes Aminosilan oder Mercaptosilan liegt dabei bevorzugt in der gleichen Komponente wie das Amin der Formel (I) vor.
Ein gegebenenfalls vorhandenes Epoxysilan liegt dabei bevorzugt in der gleichen Komponente wie das Epoxidharz vor.
Bevorzugt liegen alle gegenüber Epoxid-Gruppen reaktiven Bestandteile nicht in der gleichen Komponente wie das Epoxid-Flüssigharz vor.

In einer bevorzugten Ausführungsform der Erfindung umfasst die Zusammensetzung eine erste Komponente enthaltend
- mindestens ein Silangruppen-haltiges Polymer und
- mindestens ein Epoxid-Flüssigharz,
   und eine zweite Komponente enthaltend
- mindestens ein Amin der Formel (I) und
- gegebenenfalls mindestens ein Aminosilan.

In einer weiteren bevorzugten Ausführungsform der Erfindung umfasst die Zusammensetzung eine erste Komponente enthaltend
- mindestens ein Silangruppen-haltiges Polymer,
- mindestens ein Amin der Formel (I) und
- gegebenenfalls mindestens ein Aminosilan,
   und eine zweite Komponente enthaltend
- mindestens ein Epoxid-Flüssigharz.

Bei beiden Ausführungsformen sind die Komponenten für sich allein unter Ausschluss von Feuchtigkeit lagerstabil. Beim Vermischen der beiden Komponenten reagieren primäre und/oder sekundäre Aminogruppen mit vorhandenen Epoxidgruppen. Silangruppen reagieren unter Freisetzung von Alkohol, wenn sie mit Wasser in Kontakt kommen.

In einer Ausführungsform der Erfindung enthält die Zusammensetzung Wasser oder eine Wasser freisetzende Substanz. Eine solche Zusammensetzung ist besonders geeignet für Anwendungen, bei welchen die Aufnahme von Wasser aus der Luft oder aus den Substraten, auf welche die Zusammensetzung appliziert ist, gering ist. Dies sind insbesondere Anwendungen als Klebstoff zwischen diffusionsdichten Materialien wie Metallen, Kunststoffen, faserverstärkten Kompositwerkstoffen, Glas oder Keramik, bei welchen der Klebstoff kaum Luftkontakt hat.
Bevorzugt enthält die Zusammensetzung gesamthaft bis zu 1 Gewichts-% freies oder freisetzbares Wasser.
Insbesondere beträgt das Verhältnis zwischen dem in der Zusammensetzung enthaltenen bzw. in der Zusammensetzung freigesetzten Wasser zum für die vollständige Hydrolyse und Vernetzung der Silangruppen benötigten Wasser mindestens 0.5, bevorzugt mindestens 1, und höchstens 5, bevorzugt höchstens 2.5.
Das Wasser kann in freier Form vorliegen oder physikalisch oder chemisch an ein Trägermaterial gebunden sein. Als Trägermaterialien für Wasser geeignet sind poröse Materialien, welche Wasser in Hohlräume einschliessen, insbesondere Kieselgur oder Molekularsiebe. Weitere geeignete Trägermaterialien sind solche, die Wasser in nicht stöchiometrischen Mengen aufnehmen und eine pastöse Konsistenz haben oder Gels bilden, beispielsweise Kieselgele, Tone, Polysaccharide oder Polyacrylsäuren, die auch unter dem Begriff "Super-Absorber" bekannt sind und beispielsweise in der Herstellung von Hygieneartikeln zum Einsatz kommen. Weiterhin geeignete Trägermaterialien sind Polymere, in welchen Wasser so emulgiert werden kann, dass eine stabile Emulsion entsteht.
Als Wasser freisetzende Substanz geeignet sind Hydrate oder Aquakomplexe, insbesondere anorganische Verbindungen, die Wasser koordinativ gebunden oder als Kristallwasser enthalten, insbesondere Na₂SO₄·10H₂O, CaSO₄·2H₂O, CaSO₄·½H₂O, Na₂B₄O_{7½}·10H₂O, MgSO₄·7H₂O, die Hexaquakomplexe von Eisen (II), Eisen (III), Kobalt (II), Kobalt (III) oder Nickel (II), [(H₂O)₄Co(NH₃)₂]³⁺ oder [Cl(H₂O)₃Co(NH₃)₂]²⁺.
Als Wasser freisetzende Substanz weiterhin geeignet sind Verbindungen, die Wasser beim Erhitzen, insbesondere bei einer Temperatur im Bereich von 50 bis 150 °C, insbesondere 70 bis 130 °C, freisetzen, wie beispielsweise Borsäure, Aluminiumhydroxide oder Kieselsäuren. Insbesondere geeignet ist Borsäure. Diese Verbindung liegt bevorzugt in feinteilig dispergierter Form vor. Sie weist insbesondere einen mittleren Teilchendurchmesser im Bereich von 0.01 bis 100 µm, bevorzugt 0.1 bis 50 µm, insbesondere 0.3 bis 30 µm, auf.
Als Wasser freisetzende Substanz weiterhin geeignet sind Verbindungen, welche mit primären Aminen kondensieren und dabei Wasser freisetzen können. Geeignete mit primären Aminen kondensationsfähige Verbindungen sind insbesondere:
- Ketone, insbesondere Aceton, Methylethylketon, Methylisobutylketon, Methylamylketon, Methylisoamylketon, Cyclohexanon;
- Diketone, insbesondere 1,3-Diketone, insbesondere 2,4-Pentandion oder 3,5-Heptandion, oder 1,4-Diketone, insbesondere 2,5-Hexandion;
- Aldehyde, insbesondere Propanal, 2-Methylpropanal, Butanal, 2-Methylbutanal, 2-Ethylbutanal, Pentanal, Pivalaldehyd, 2-Methylpentanal, 3-Methylpentanal, 4-Methylpentanal, 2,3-Dimethylpentanal, Hexanal, 2-Ethylhexanal, Heptanal, Octanal, Nonanal, Decanal, Undecanal, 2-Methylundecanal, Dodecanal, Methoxyacetaldehyd, Cyclopropancarbaldehyd, Cyclopentancarbaldehyd, Cyclohexancarbaldehyd, 2,2-Dimethyl-3-phenylpropanal, 1-Naphthaldehyd, Benzaldehyd, Salicylaldehyd, 2-Methylbenzaldehyd, 3-Methylbenzaldehyd, 4-Methylbenzaldehyd, 4-Methoxybenzaldehyd, 4-Dimethylaminobenzaldehyd, 2,2-Dimethyl-3-(N,N-bis(methoxyethyl))amino-propanal, 2,2-Dimethyl-3-(N-morpholino)propanal, 2,2-Dimethyl-3-(N-(2,6-dimethyl)-morpholino)propanal, 2,2-Dimethyl-3-acetoxypropanal, 2,2-Dimethyl-3-iso-butyroxypropanal oder 2,2-Dimethyl-3-lauroyloxypropanal.

In einer Ausführungsform der Erfindung enthält die Zusammensetzung mindestens eine Wasser freisetzende Substanz in Form einer mit primären Aminen kondensationsfähigen Verbindung. Diese Verbindung liegt bevorzugt nicht in der gleichen Komponente wie das Amin der Formel (I) vor.
Beim Vermischen der Komponenten kann die mit primären Aminen kondensationsfähige Verbindung mit vorhandenen primären Aminen reagieren, wobei in der Zusammensetzung sehr schnell Wasser in feinster Verteilung entsteht und die vorhandenen Silangruppen somit besonders effizient vernetzen können.

Die Zusammensetzung kann zusätzlich insbesondere mindestens ein weiteres Amin, das nicht der Formel (I) entspricht, und/oder mindestens einen Beschleuniger enthalten.

Als Beschleuniger geeignet sind Substanzen, welche die Vernetzung von Silangruppen-haltigen Polymeren beschleunigen. Dafür geeignet sind insbesondere Metallkatalysatoren und/oder stickstoffhaltige Verbindungen.
Geeignete Metallkatalysatoren sind Verbindungen von Titan, Zirkonium, Aluminium oder Zinn, insbesondere Organozinn-Verbindungen, Organotitanate, Organozirkonate oder Organoaluminate, wobei diese Metallkatalysatoren insbesondere Alkoxygruppen, Aminoalkoxygruppen, Sulfonatgruppen, Carboxylgruppen, 1,3-Diketonatgruppen, 1,3-Ketoesteratgruppen, Dialkylphosphatgruppen oder Dialkylpyrophosphatgruppen aufweisen.
Besonders geeignete Organozinn-Verbindungen sind Dialkylzinnoxide, Dialkylzinndichloride, Dialkylzinndicarboxylate oder Dialkylzinndiketonate, insbesondere Dibutylzinnoxid, Dibutylzinndichlorid, Dibutylzinndiacetat, Dibutylzinndilaurat, Dibutylzinndiacetylacetonat, Dioctylzinnoxid, Dioctylzinndichlorid, Dioctylzinndiacetat, Dioctylzinndilaurat oder Dioctylzinndiacetylacetonat, sowie Alkylzinnthioester.
Besonders geeignete Organotitanate sind Bis(ethylacetoacetato)diisobutoxytitan(IV), Bis(ethylacetoacetato)diisopropoxy-titan(IV), Bis(acetylacetonato)-diisopropoxy-titan(IV), Bis(acetylacetonato)-diisobutoxy-titan(IV), Tris(oxyethyl)amin-isopropoxy-titan(IV), Bis[tris(oxyethyl)amin]-diisopropoxy-titan(IV), Bis(2-ethylhexan-1,3-dioxy)-titan(IV), Tris[2-((2-aminoethyl)amino)ethoxy]-ethoxy-titan(IV), Bis(neopentyl(diallyl)oxy-diethoxy-titan(IV), Titan(IV)-tetra-butanolat, Tetra-(2-ethylhexyloxy)titanat, Tetra-(isopropoxy)titanat oder Polybutyltitanat. Insbesondere geeignet sind die kommerziell erhältlichen Typen Tyzor® AA, GBA, GBO, AA-75, AA-65, AA-105, DC, BEAT, BTP, TE, TnBT, KTM, TOT, TPT oder IBAY (alle von Dorf Ketal); Tytan PBT, TET, X85, TAA, ET, S2, S4 oder S6 (alle von Borica Company Ltd.) oder Ken-React® KR® TTS, 7, 9QS, 12, 26S, 33DS, 38S, 39DS, 44, 134S, 138S, 133DS, 158FS oder LICA® 44 (alle von Kenrich Petrochemicals).
Besonders geeignete Organozirkonate sind die kommerziell erhältlichen Typen Ken-React® NZ® 38J, KZ® TPPJ, KZ® TPP, NZ® 01, 09, 12 38, 44 oder 97 (alle von Kenrich Petrochemicals) oder Snapcure® 3020, 3030, 1020 (alle von Johnson Matthey & Brandenberger).
Ein besonders geeignetes Organoaluminat ist der kommerziell erhältliche Typ K-Kat 5218 (von King Industries).

Als Beschleuniger geeignete stickstoffhaltige Verbindungen sind insbesondere Amine wie insbesondere N-Ethyldiisopropylamin, N,N,N',N'-Tetramethylalkylendiamine, Polyoxyalkylenamine, 1,4-Diazabicyclo[2.2.2]octan; Amidine wie insbesondere 1,8-Diazabicyclo[5.4.0]undec-7-en (DBU), 1,5-Diazabicyclo-[4.3.0]non-5-en (DBN), 6-Dibutylamino-1,8-diazabicyclo[5.4.0]undec-7-en; Guanidine wie insbesondere Tetramethylguanidin, 2-Guanidinobenzimidazol, Acetylacetoneguanidin, 1,3-Di-o-tolylguanidin, 2-tert-Butyl-1,1,3,3-tetramethylguanidin oder Umsetzungsprodukte aus Carbodiimiden und Aminen wie insbesondere Polyetheraminen oder Aminosilanen; oder Imidazole wie insbesondere N-(3-Trimethoxysilylpropyl)-4,5-dihydroimidazol oder N-(3-Triethoxysilylpropyl)-4,5-dihydroimidazol.

Insbesondere geeignet sind auch Kombinationen verschiedener Beschleuniger für die Vernetzung von Silangruppen-haltigen Polymeren, insbesondere Kombinationen aus mindestens einem Metallkatalysator und mindestens einer stickstoffhaltigen Verbindung.
Bevorzugt sind Organozinn-Verbindungen, Organotitanate, Amine, Amidine, Guanidine oder Imidazole.

Als Beschleuniger geeignet sind weiterhin Substanzen, welche die Reaktion von Epoxidgruppen mit Aminogruppen beschleunigen. Dafür geeignet sind insbesondere Säuren oder zu Säuren hydrolysierbare Verbindungen, insbesondere organische Carbonsäuren wie Essigsäure, Benzoesäure, Salicylsäure, 2-Nitrobenzoesäure, Milchsäure, organische Sulfonsäuren wie Methansulfonsäure, p-Toluolsulfonsäure oder 4-Dodecylbenzolsulfonsäure, Sulfonsäureester, andere organische oder anorganische Säuren wie insbesondere Phosphorsäure, oder Mischungen der vorgenannten Säuren und Säureester; tertiäre Amine wie insbesondere 1,4-Diazabicyclo[2.2.2]octan, Benzyldimethylamin, α-Methylbenzyldimethylamin, Triethanolamin, Dimethyl-aminopropylamin, Imidazole wie insbesondere N-Methylimidazol, N-Vinylimidazol oder 1,2-Dimethylimidazol, Salze solcher tertiärer Amine, quaternäre Ammoniumsalze, wie insbesondere Benzyltrimethylammoniumchlorid, Amidine wie insbesondere 1,8-Diazabicyclo-[5.4.0]undec-7-en, Guanidine wie insbesondere 1,1,3,3-Tetramethylguanidin, Phenole, insbesondere Bisphenole, Phenol-Harze oder Mannich-Basen wie insbesondere 2-(Dimethylaminomethyl)phenol, 2,4,6-Tris(dimethylaminomethyl)phenol oder Polymere aus Phenol, Formaldehyd und N,N-Dimethyl-1,3-propandiamin, Phosphite wie insbesondere Di- oder Triphenylphosphite, oder Mercaptogruppen aufweisende Verbindungen. Bevorzugt sind Säuren, tertiäre Amine oder Mannich-Basen. Am meisten bevorzugt ist Salicylsäure oder 2,4,6-Tris(dimethylaminomethyl)phenol oder eine Kombination davon.

Als weiteres Amin bevorzugt sind Polyamine, welche mindestens drei gegenüber Epoxidgruppen reaktive Aminwasserstoffe aufweisen, insbesondere die Folgenden:
- aliphatische, cycloaliphatische oder arylaliphatische primäre Diamine, insbesondere 2,2-Dimethyl-1,3-propandiamin, 1,3-Pentandiamin (DAMP), 1,5-Pentandiamin, 1,5-Diamino-2-methylpentan (MPMD), 2-Butyl-2-ethyl-1,5-pentandiamin (C11-Neodiamin), 1,6-Hexandiamin, 2,5-Dimethyl-1,6-hexandiamin, 2,2(4),4-Trimethylhexamethylendiamin (TMD), 1,7-Heptandiamin, 1,8-Octandiamin, 1,9-Nonandiamin, 1,10-Decandiamin, 1,11-Undecandiamin, 1,12-Dodecandiamin, 1,2-, 1,3- oder 1,4-Diaminocyclohexan, Bis(4-aminocyclohexyl)methan (H₁₂-MDA), Bis(4-amino-3-methylcyclohexyl)methan, Bis(4-amino-3-ethylcyclohexyl)methan, Bis(4-amino-3,5-dimethylcyclohexyl)methan, Bis(4-amino-3-ethyl-5-methylcyclohexyl)methan, 1-Amino-3-aminomethyl-3,5,5-trimethylcyclohexan (Isophorondiamin oder IPDA), 2- oder 4-Methyl-1,3-diaminocyclohexan oder Mischungen davon, 1,3-Bis(aminomethyl)cyclohexan, 1,4-Bis(aminomethyl)cyclohexan, 2,5(2,6)-Bis(aminomethyl)bicyclo[2.2.1]heptan (NBDA), 3(4),8(9)-Bis(aminomethyl)tricyclo-[5.2.1.0^{2,6}]decan, 1,4-Diamino-2,2,6-trimethylcyclohexan (TMCDA), 1,8-Menthandiamin, 3,9-Bis(3-aminopropyl)-2,4,8,10-tetraoxaspiro[5.5]undecan, 1,3-Bis(aminomethyl)benzol (MXDA) oder 1,4-Bis(aminomethyl)benzol;
- Ethergruppen-haltige aliphatische primäre Di- oder Triamine, insbesondere Bis(2-aminoethyl)ether, 3,6-Dioxaoctan-1,8-diamin, 4,7-Dioxadecan-1,10-diamin, 4,7-Dioxadecan-2,9-diamin, 4,9-Dioxadodecan-1,12-diamin, 5,8-Dioxadodecan-3,10-diamin, 4,7,10-Trioxatridecan-1,13-diamin oder höhere Oligomere dieser Diamine, Bis(3-aminopropyl)polytetrahydrofurane oder andere Polytetrahydrofurandiamine, cycloaliphatische Ethergruppen-haltige Diamine aus der Propoxylierung und nachfolgenden Aminierung von 1,4-Dimethylolcyclohexan, erhältlich insbesondere als Jeffamine® RFD-270 (von Huntsman), oder Polyoxyalkylendi- oder -triamine, welche typischerweise Produkte aus der Aminierung von Polyoxyalkylendi- oder -triolen darstellen und beispielsweise erhältlich sind unter dem Namen Jeffamine® (von Huntsman), unter dem Namen Polyetheramine (von BASF) oder unter dem Namen PC Amine® (von Nitroil). Insbesondere geeignete Polyoxyalkylendi- oder -triamine sind Jeffamine® D-230, Jeffamine® D-400, Jeffamine® D-2000, Jeffamine® EDR-104, Jeffamine® EDR-148, Jeffamine® EDR-176, Jeffamine® T-403, Jeffamine® T-3000, Jeffamine® T-5000, oder entsprechende Amine von BASF oder Nitroil;
- sekundäre Aminogruppen aufweisende Polyamine mit zwei primären aliphatischen Aminogruppen, wie insbesondere 3-(2-Aminoethyl)aminopropylamin, Bis(hexamethylen)triamin (BHMT), Diethylentriamin (DETA), Triethylentetramin (TETA), Tetraethylenpentamin (TEPA), Pentaethylenhexamin (PEHA) oder höhere Homologe linearer Polyethylenamine wie Polyethylenpolyamin mit 5 bis 7 Ethylenamin-Einheiten (sogenanntes "higher ethylenepolyamine", HEPA), Produkte aus der mehrfachen Cyanoethylierung oder Cyanobutylierung und anschliessender Hydrierung von primären Di- und Polyaminen mit mindestens zwei primären Aminogruppen, wie Dipropylentriamin (DPTA), N-(2-Aminoethyl)-1,3-propandiamin (N3-Amin), N,N'-Bis(3-aminopropyl)ethylendiamin (N4-Amin), N,N'-Bis(3-aminopropyl)-1,4-diaminobutan, N5-(3-Aminopropyl)-2-methyl-1,5-pentandiamin, N3-(3-Aminopentyl)-1,3-pentandiamin, N5-(3-Amino-1-ethylpropyl)-2-methyl-1,5-pentandiamin oder N,N'-Bis(3-amino-1-ethylpropyl)-2-methyl-1,5-pentandiamin;
- tertiäre Aminogruppen aufweisende Polyamine, wie insbesondere N,N-Dimethyldi(1,3-propylen)triamin (DMAPAPA), N,N'-Bis(aminopropyl)piperazin, N,N-Bis(3-aminopropyl)methylamin, N,N-Bis(3-aminopropyl)ethylamin, N,N-Bis(3-aminopropyl)propylamin, N,N-Bis(3-aminopropyl)cyclohexylamin, N,N-Bis(3-aminopropyl)-2-ethylhexylamin, Produkte aus der doppelten Cyanoethylierung und nachfolgender Reduktion von Fettaminen, welche abgeleitet sind von natürlichen Fettsäuren, wie N,N-Bis(3-aminopropyl)dodecylamin oder N,N-Bis(3-aminopropyl)talgalkylamin, erhältlich als Triameen® Y12D oder Triameen® YT (von Akzo Nobel);
- aliphatische, cycloaliphatische oder arylaliphatische primäre Triamine, insbesondere 4-Aminomethyl-1,8-octandiamin, 1,3,5-Tris(aminomethyl)benzol, 1,3,5-Tris(aminomethyl)cyclohexan, Tris(2-aminoethyl)amin, Tris(2-amino-propyl)amin oder Tris(3-aminopropyl)amin;
- Diamine mit einer primären und einer sekundären Aminogruppe, insbesondere Produkte aus der reduktiven Alkylierung von primären aliphatischen Polyaminen mit Aldehyden oder Ketonen, wie insbesondere N-Benzyl-1,3-bis(aminomethyl)benzol, N-2-Ethylhexyl-1,3-bis(aminomethyl)benzol, oder partiell styrolisierte Polyamine wie insbesondere styrolisiertes MXDA (erhältlich als Gaskamine® 240 von Mitsubishi Gas Chemical);
- Mannich-Basen erhalten aus der Umsetzung von Phenolen mit Aldehyden, insbesondere Formaldehyd, und aliphatischen oder cycloaliphatischen Aminen, insbesondere Phenalkamine, d.h. Mannich-Basen von Cardanol (langkettigen Alk(en)ylphenolen und -resorcinen gewonnen durch thermische Behandlung von Cashew-Schalenöl-Extrakten, enthaltend als Hauptkomponente 3-(Pentadeca-8,11,14-trienyl)phenol, insbesondere die kommerziellen Typen Cardolite® NC-540, NC-557, NC-558, NC-566, Lite 2002, GX-6019, GX-6013, NX-4943, NX-5607 oder NX-5608 (von Cardolite), Aradur® 3440, 3441, 3442 oder 3460 (von Huntsman) oder Beckopox® EH 614, EH 621, EH 624, EH 628 oder EH 629 (von Cytec);
- aromatische Polyamine, wie insbesondere m- und p-Phenylendiamin, 4,4'-, 2,4' und/oder 2,2'-Diaminodiphenylmethan, 3,3'-Dichloro-4,4'-diaminodiphenylmethan (MOCA), 2,4- und/oder 2,6-Toluylendiamin, Mischungen von 3,5-Dimethylthio-2,4- und -2,6-toluylendiamin (erhältlich als Ethacure® 300 von Albermarle), Mischungen von 3,5-Diethyl-2,4- und -2,6-toluylendiamin (DETDA, erhältlich als Ethacure® 100 von Albermarle), 3,3',5,5'-Tetraethyl-4,4'-diaminodiphenylmethan (M-DEA), 3,3',5,5'-Tetraethyl-2,2'-dichloro-4,4'-diaminodiphenylmethan (M-CDEA), 3,3'-Diisopropyl-5,5'-dimethyl-4,4'-diaminodiphenylmethan (M-MIPA), 3,3',5,5'-Tetraisopropyl-4,4'-diaminodiphenylmethan (M-DIPA), 4,4'-Diaminodiphenylsulfon (DDS), 4-Amino-N-(4-aminophenyl)benzolsulfonamid, 5,5'-Methylendianthranilsäure, Dimethyl-(5,5'-methylendianthranilat), 1,3-Propylen-bis(4-aminobenzoat), 1,4-Butylen-bis(4-aminobenzoat), Polytetramethylenoxid-bis(4-aminobenzoat) (erhältlich als Versalink® von Air Products), 1,2-Bis(2-aminophenylthio)ethan, 2-Methylpropyl-(4-chloro-3,5-diaminobenzoat) oder tert.Butyl-(4-chloro-3,5-diaminobenzoat);
- Polyamidoamine, insbesondere Umsetzungsprodukte aus einer ein- oder mehrwertigen Carbonsäure, beziehungsweise deren Ester oder Anhydride, insbesondere einer Dimerfettsäure, mit einem im stöchiometrischen Überschuss eingesetzten aliphatischen, cycloaliphatischen oder aromatischen Polyamin, insbesondere einem Polyalkylenamin wie beispielsweise DETA oder TETA, insbesondere die kommerziell erhältlichen Polyamidoamine Versamid® 100, 125, 140 oder 150 (von Cognis), Aradur® 223, 250 oder 848 (von Huntsman), Euretek®3607 oder 530 (von Huntsman) oder Beckopox® EH 651, EH 654, EH 655, EH 661 oder EH 663 (von Cytec);
- oder Addukte von Polyaminen mit Epoxiden oder Epoxidharzen, insbesondere Addukte mit Diepoxiden im Molverhältnis von ungefähr 2/1, oder Addukte mit Monoepoxiden im Molverhältnis von ungefähr 1/1, oder Umsetzungsprodukte aus Polyaminen und Epichlorhydrin, insbesondere jenes von 1,3-Bis(aminomethyl)benzol, kommerziell erhältlich als Gaskamine® 328 (von Mitsubishi Gas Chemical).

Als weiteres Amin bevorzugt sind primäre aliphatische Diamine mit einem Molekulargewicht von mindestens 120 g/mol, insbesondere mindestens 150 g/mol, bevorzugt TMD, H₁₂-MDA, IPDA, 2- oder 4-Methyl-1,3-diaminocyclohexan oder Mischungen davon, 1,3-Bis(aminomethyl)cyclohexan, 1,4-Bis(aminomethyl)cyclohexan, NBDA, MXDA oder BHMT, insbesondere TMD, H₁₂-MDA, IPDA, NBDA oder BHMT.

Als weiteres Amin bevorzugt sind weiterhin Ethergruppen-haltige aliphatische primäre Di- oder Triamine, insbesondere Polyoxyalkylendi- oder -triamine mit einem mittleren Molekulargewicht im Bereich von 200 bis 500 g/mol, insbesondere Jeffamine® D-230 oder Jeffamine® D-400 oder Jeffamine® T-403 (alle von Huntsman), oder cycloaliphatische Ethergruppen-haltige Diamine aus der Propoxylierung und nachfolgenden Aminierung von 1,4-Dimethylolcyclohexan, insbesondere Jeffamine® RFD-270 (von Huntsman).

Als weiteres Amin bevorzugt sind weiterhin mindestens drei Aminwasserstoffe aufweisende Addukte aus mindestens einem Polyamin mit 2 bis 12 C-Atomen und mindestens einem Epoxid, insbesondere ein mindestens drei Aminwasserstoffe aufweisendes Addukt aus mindestens einem Polyamin mit mindestens einem aromatischen Monoepoxid, welche im Molverhältnis von ca. 1/1 umgesetzt sind. Während der Umsetzung ist das Polyamin insbesondere im Überschuss vorhanden gewesen und nach der Umsetzung mittels Destillation entfernt worden. Als aromatisches Monoepoxid bevorzugt ist Kresylglycidylether und als Polyamin bevorzugt ist 1,2-Ethylendiamin, 1,2-Propylendiamin, 1,3-Propylendiamin oder MPMD, insbesondere 1,2-Propylendiamin oder MPMD.

Weitere Amine sind in der Zusammensetzung bevorzugt in einer solchen Menge vorhanden, dass höchstens 60 %, insbesondere höchstens 45 %, der in der Zusammensetzung vorhandenen Aminwasserstoffe aus weiteren Aminen stammen.

Die Zusammensetzung ist bevorzugt weitgehend frei von Aminen mit einem Molekulargewicht unterhalb von 150 g/mol, insbesondere unterhalb von 120 g/mol. Bevorzugt enthält sie weniger als 1 Gewichts-%, insbesondere weniger als 0.5 Gewichts-%, Amine mit einem Molekulargewicht unterhalb von 150 g/mol, insbesondere unterhalb von 120 g/mol. Eine solche Zusammensetzung ist toxikologisch und geruchlich besonders vorteilhaft.

Die Zusammensetzung kann weitere gegenüber Epoxidgruppen reaktive Substanzen enthalten, beispielsweise Monoamine wie Hexylamin oder Benzylamin oder Polyethermonoamine, insbesondere Alkohol-gestartete Typen wie Jeffamine® M-600, Jeffamine® M-1000, Jeffamine® M-2005, Jeffamine® M-2070, Jeffamine® XTJ-581, Jeffamine® XTJ-249 oder Jeffamine® XTJ-435, oder Alkylphenol-gestartete Typen wie Jeffamine® XTJ-436 (alle von Huntsman), oder Mercaptogruppen aufweisende Verbindungen, insbesondere die Folgenden:
- flüssige Mercaptan-terminierte Polysulfid-Polymere, bekannt unter dem Markennamen Thiokol® (von Morton Thiokol; beispielsweise erhältlich von SPI Supplies, oder von Toray Fine Chemicals), insbesondere die Typen LP-3, LP-33, LP-980, LP-23, LP-55, LP-56, LP-12, LP-31, LP-32 oder LP-2; sowie weiterhin bekannt unter dem Markennamen Thioplast® (von Akzo Nobel), insbesondere die Typen G 10, G 112, G 131, G 1, G 12, G 21, G 22, G 44 oder G 4;
- Mercaptan-terminierte Polyoxyalkylen-Ether, erhältlich beispielsweise durch Umsetzung von Polyoxyalkylendi- oder -triolen entweder mit Epichlorhydrin oder mit einem Alkylenoxid, gefolgt von Natriumhydrogensulfid;
- Mercaptan-terminierte Verbindungen in Form von Polyoxyalkylen-Derivaten, bekannt unter dem Markennamen Capcure® (von Cognis), insbesondere die Typen WR-8, LOF oder 3-800;
- Polyester von Thiocarbonsäuren, beispielsweise Pentaerythritoltetramercaptoacetat, Trimethylolpropantrimercaptoacetat, Glykoldimercaptoacetat, Pentaerythritoltetra-(3-mercaptopropionat), Trimethylolpropantri(3-mercaptopropionat) oder Glykoldi-(3-mercaptopropionat), oder Veresterungsprodukte von Polyoxyalkylendiolen oder -triolen, ethoxyliertem Trimethylolpropan oder Polyester-Diolen mit Thiocarbonsäuren wie Thioglykolsäure oder 2- oder 3-Mercaptopropionsäure; oder
- weitere Mercaptogruppen aufweisende Verbindungen, wie insbesondere 2,4,6-Trimercapto-1,3,5-triazin, 2,2'-(Ethylendioxy)-diethanthiol (Triethylenglykol-dimercaptan) oder Ethandithiol.

Weitere geeignete Bestandteile der Zusammensetzung sind insbesondere die folgenden Hilfs- und Zusatzmittel:
- Haftvermittler und/oder Vernetzer, insbesondere (Meth)acrylosilane, Anhydridosilane, Carbamatosilane, Alkylsilane oder Iminosilane, oder oligomere Formen dieser Silane, oder Addukte aus primären Aminosilanen mit Epoxysilanen oder (Meth)acrylosilanen oder Anhydridosilanen;
- Weichmacher, insbesondere Carbonsäureester wie Phthalate, insbesondere Diisononylphthalat (DINP), Diisodecylphthalat (DIDP) oder Di(2-propylheptyl)phthalat (DPHP), hydrierte Phthalate, insbesondere hydriertes Diisononylphthalat (DINCH), Terephthalate, insbesondere Dioctylterephthalat, Trimellitate, Adipate, insbesondere Dioctyladipat, Azelate, Sebacate, Polyole, insbesondere Polyoxyalkylenpolyole oder Polyesterpolyole, Benzoate, Glykolether, Glykolester, organische Phosphor-, Phosphon- oder Sulfonsäureester, Polybutene, Polyisobutene oder von natürlichen Fetten oder Ölen abgeleitete Weichmacher, insbesondere epoxidiertes Soja- oder Leinöl;
- Lösemittel, Verdünner oder Extender, wie insbesondere Xylol, 2-Methoxyethanol, Dimethoxyethanol, 2-Ethoxyethanol, 2-Propoxyethanol, 2-Isopropoxyethanol, 2-Butoxyethanol, 2-Phenoxyethanol, 2-Benzyloxyethanol, Benzylalkohol, Ethylenglykol, Ethylenglykoldimethylether, Ethylenglykoldiethylether, Ethylenglykoldibutylether, Ethylenglykoldiphenylether, Diethylenglykol, Diethylenglykol-monomethylether, Diethylenglykol-monoethylether, Diethylenglykol-mono-n-butylether, Diethylenglykoldimethylether, Diethylenglykoldiethylether, Diethylenglykoldi-n-butylylether, Propylenglykolbutylether, Propylenglykolphenylether, Dipropylenglykol, Dipropylenglykolmonomethylether, Dipropylenglykoldimethylether, Dipropylenglykoldi-n-butylether, N-Methylpyrrolidon, Diphenylmethan, Diisopropylnaphthalin, Erdölfraktionen wie zum Beispiel Solvesso®-Typen (von Exxon), Alkylphenole wie tert.Butylphenol, Nonylphenol, Dodecylphenol und Cardanol (aus Cashew-Schalen-Öl, enthaltend als Hauptbestandteil 3-(8,11,14-Pentadecatrienyl)phenol), styrolisiertes Phenol, Bisphenole, aromatische Kohlenwasserstoffharze, insbesondere Phenolgruppen-haltige Typen, alkoxyliertes Phenol, insbesondere ethoxyliertes oder propoxyliertes Phenol, insbesondere 2-Phenoxyethanol, Adipate, Sebacate, Phthalate, Benzoate, organische Phosphor- oder Sulfonsäureester oder Sulfonamide;
- Reaktivverdünner, insbesondere Reaktivverdünner für Epoxidharze wie Kresylglycidylether, Benzylglycidylether, tert.Butylphenylglycidylether, Nonylphenylglycidylether, 2-Ethylhexylglycidylether, Glycidylether von natürlichen Alkoholen wie insbesondere C₈- bis C₁₀-Alkylglycidylether oder C₁₂- bis C₁₄-Alkylglycidylether oder Glycidylether von Di- oder Polyolen wie Polypropylenglykolen, Dimethylolcyclohexan, Glycerin, Neopentylglykol oder Trimethylolpropan, oder weiterhin epoxidierte natürliche Öle wie Sojaöl, Leinöl oder Palmkernöl, oder Acetoacetatgruppen aufweisende Verbindungen, insbesondere acetoacetylierte Polyole, oder Butyrolacton oder Carbonate oder Aldehyde oder Isocyanate oder Reaktivgruppen-aufweisende Silikone;
- anorganische oder organische Füllstoffe, insbesondere gemahlene oder gefällte Calciumcarbonate, welche gegebenenfalls mit Fettsäuren, insbesondere Stearaten, beschichtet sind, Baryt (Schwerspat), Talk, Quarzmehl, Quarzsand, Eisenglimmer, Dolomit, Wollastonit, Kaolin, Mica (Kalium-Aluminium-Silikat), Molekularsieb, Aluminiumoxid, Aluminiumhydroxid, Magnesiumhydroxid, Kieselsäure, Zement, Gips, Flugasche, Russ, Graphit, MetallPulver wie Aluminium, Kupfer, Eisen, Zink, Silber oder Stahl, PVC-Pulver oder Hohlkugeln;
- Fasern, insbesondere Glasfasern, Kohlefasern, Metallfasern, Keramikfasern, Polymerfasern wie Polyamidfasern oder Polyethylenfasern, oder Naturfasern wie Wolle, Cellulose, Hanf oder Sisal;
- anorganische oder organische Pigmente, insbesondere Titandioxid, Chromoxid oder Eisenoxid;
- Farbstoffe;
- Trocknungsmittel, insbesondere Tetraethoxysilan, Vinyltrimethoxy- oder Vinyltriethoxysilan oder Organosilane, welche in α-Stellung zur Silangruppe eine funktionelle Gruppe aufweisen, insbesondere N-(Methyldimethoxysilylmethyl)-O-methyl-carbamat, (Methacryloxymethyl)silane, Methoxymethylsilane, Orthoameisensäureester, sowie Calciumoxid oder Molekularsiebe.
- Rheologie-Modifizierer, insbesondere Verdickungsmittel, insbesondere Schichtsilikate wie Bentonite, Derivate von Rizinusöl wie hydriertes Rizinusöl, Polyamide, Polyurethane, Harnstoffverbindungen, Polyvinylchloride, pyrogene Kieselsäuren;
- natürliche Harze, Fette oder Öle wie Kolophonium, Schellack, Leinöl, Rizinusöl oder Sojaöl.
- nicht-reaktive Polymere, insbesondere Homo- oder Copolymere von ungesättigten Monomeren, insbesondere aus der Gruppe umfassend Ethylen, Propylen, Butylen, Isobutylen, Isopren, Vinylacetat oder Alkyl(meth)acrylate, insbesondere Polyethylene (PE), Polypropylene (PP), Polyisobutylene, Ethylenvinylacetat-Copolymere (EVA) oder ataktische Poly-α-Olefine (APAO);
- flammhemmende Substanzen, insbesondere die bereits genannten Füllstoffe Aluminiumhydroxid oder Magnesiumhydroxid, oder Bor-Verbindungen, Antimontrioxid oder Phosphor, oder insbesondere organische Phosphorsäureester wie insbesondere Triethylphosphat, Trikresylphosphat, Triphenylphosphat, Diphenylkresylphosphat, Isodecyldiphenylphosphat, Tris(1,3-dichlor-2-propyl)phosphat, Tris(2-chlorethyl)phosphat, Tris(2-ethylhexyl)-phosphat, Tris(chlorisopropyl)phosphat, Tris(chlorpropyl)phosphat, isopropyliertes Triphenylphosphat, Mono-, Bis- oder Tris(isopropylphenyl)phosphate unterschiedlichen Isopropylierungsgrades, Resorcinol-bis(diphenylphosphat), Bisphenol-A-bis(diphenylphosphat) oder Ammoniumpolyphosphate; oder
- Additive, insbesondere Netzmittel, Verlaufmittel, Entschäumer, Entlüfter, Stabilisatoren gegen Oxidation, Wärme, Licht oder UV-Strahlung oder Biozide.
Es kann sinnvoll sein, gewisse Bestandteile vor dem Einmischen in die Zusammensetzung chemisch oder physikalisch zu trocknen, insbesondere wenn sie zusammen mit dem Silangruppen-haltigen Polymer gelagert werden sollen.

Im Fall einer zweikomponentigen Zusammensetzungen können solche weitere Bestandteile als Bestandteil der ersten oder der zweiten Komponente vorhanden sein. Freies Wasser liegt bevorzugt nicht in der gleichen Komponente wie das Silangruppen-haltige Polymer vor. Gegenüber Epoxidgruppen reaktive weitere Bestandteile sind bevorzugt nicht in der gleichen Komponente wie das Epoxidharz.

In der Zusammensetzung liegt das Verhältnis zwischen der Anzahl von gegenüber Epoxidgruppen reaktiven Gruppen gegenüber der Anzahl Epoxidgruppen bevorzugt im Bereich von 0.5 bis 1.5, insbesondere in Bereich von 0.8 bis 1.2.

Die Zusammensetzung enthält bevorzugt nur einen geringen Gehalt an Lösemitteln. Sie enthält bevorzugt 200 g VOC pro Liter oder weniger, insbesondere 150 g VOC pro Liter oder weniger, besonders bevorzugt 100 g VOC pro Liter oder weniger, ganz besonders bevorzugt 50 g VOC pro Liter oder weniger. Insbesondere ist sie weitgehend frei von Lösemitteln.

Die Zusammensetzung wird insbesondere als zweikomponentige Zusammensetzung hergestellt und verwendet. Dabei werden die beiden Komponenten separat unter Ausschluss von Feuchtigkeit hergestellt und aufbewahrt. Sie werden typischerweise jeweils in einem eigenen Gebinde gelagert. Die separaten Komponenten sind lagerstabil; das heisst, jede Komponente kann vor ihrer Anwendung während mehreren Monaten bis zu einem halben Jahr und länger aufbewahrt werden, ohne dass sie sich in ihren jeweiligen Eigenschaften in einem für ihren Gebrauch relevanten Ausmass verändert. Ein geeignetes Gebinde zum Lagern der jeweiligen Komponente ist insbesondere ein Fass, ein Hobbock, ein Beutel, ein Eimer, eine Dose, eine Kartusche oder eine Tube. Zur Anwendung der Zusammensetzung werden die beiden Komponenten kurz vor oder während der Applikation miteinander vermischt. Das Mischungsverhältnis wird dabei bevorzugt so gewählt, dass die gegenüber Epoxidgruppen reaktiven Gruppen in einem geeigneten Verhältnis zu den Epoxidgruppen stehen, wie vorgängig beschrieben. In Gewichtsteilen liegt das Mischungsverhältnis zwischen den beiden Komponenten typischerweise im Bereich von 1:10 bis 10:1.
Die Vermischung der beiden Komponenten erfolgt mittels eines geeigneten Verfahrens; sie kann kontinuierlich oder batchweise erfolgen, über einen Statikmischer oder mit Hilfe eines dynamischen Mischers. Falls das Vermischen vor der Applikation erfolgt, muss darauf geachtet werden, dass die Applikation innerhalb der Offenzeit bzw. Topfzeit der Zusammensetzung erfolgt, da es sonst zu Störungen, wie beispielsweise einem verlangsamten oder unvollständigen Aufbau der Haftung zum Substrat oder vorzeitigem Gelieren, kommen kann.
Als "Offenzeit" oder auch "Topfzeit" wird dabei die Zeitspanne zwischen dem Vermischen der Komponenten und dem Zeitpunkt, an dem Zusammensetzung nicht mehr ordnungsgemäss applizierbar ist, bezeichnet. Ein typisches Mass für das Ende der Topfzeit ist das Erreichen eines bestimmten Viskositätswerts.

Die Vermischung erfolgt bevorzugt bei Umgebungstemperatur, welche typischerweise im Bereich von etwa 5 bis 50 °C, bevorzugt bei etwa 10 bis 30 °C, liegt.
Mit dem Vermischen der beiden Komponenten beginnt die Aushärtung durch chemische Reaktion. Dabei reagieren die Epoxidgruppen mit primären und sekundären Aminogruppen unter Ringöffnung zu Aminoalkohol-Einheiten. Weitere Epoxidgruppen reagieren mit sich selbst unter anionischer Polymerisation. Die Silangruppen hydrolysieren unter Freisetzung von Alkohol, wobei Silanolgruppen (Si-OH-Gruppen) und durch nachfolgende Kondensationsreaktionen Siloxangruppen (Si-O-Si-Gruppen) gebildet werden. Als Ergebnis dieser und gegebenenfalls weiterer Reaktionen härtet die Zusammensetzung zu einem vernetzten Kunststoff aus. Falls das Wasser für die Hydrolyse der Silangruppen nicht bereits in der Zusammensetzung vorhanden war oder in dieser freigesetzt wurde, kann es aus der Luft (Luftfeuchtigkeit) oder einem Substrat stammen, oder die Zusammensetzung kann mit einer Wasser enthaltenden Komponente in Kontakt gebracht werden, zum Beispiel durch Bestreichen, Besprühen oder Einmischen.
Die Aushärtung erfolgt insbesondere bei einer Temperatur im Bereich von 0 bis 150 °C. Sie kann insbesondere bei Umgebungstemperatur erfolgen, wobei sie sich typischerweise über einige Tage bis Wochen erstreckt, bis sie unter den gegebenen Bedingungen weitgehend abgeschlossen ist. Die Aushärtung kann aber auch bei erhöhter Temperatur erfolgen, insbesondere bei einer Temperatur im Bereich von 50 bis 130 °C. In gewissen Fällen kann es vorteilhaft sein, eine bei Umgebungstemperatur teilgehärtete Zusammensetzung bei einer erhöhten Temperatur nachzuhärten bzw. vollständig auszuhärten.
Bevorzugt verläuft die Aushärtung der Zusammensetzung in der Art, dass einerseits eine ausreichende Topf- bzw. Offenzeit gewährleistet ist, um die Zusammensetzung richtig zu applizieren, und dass andererseits die Aushärtung schnell soweit fortgeschritten ist, dass die Zusammensetzung begehbar ist oder weiter bearbeitet werden kann oder eine mit der Zusammensetzung ausgeführte Verklebung selbsttragend ist und transportiert werden kann.
Ein weiterer Gegenstand der Erfindung ist somit eine ausgehärtete Zusammensetzung, erhalten aus der beschrieben Zusammensetzung durch Vermischen aller Inhaltsstoffe bzw. Komponenten der Zusammensetzung, der Applikation der vermischten Zusammensetzung und deren Aushärtung.

Die ausgehärtete Zusammensetzung weist hervorragende mechanische Eigenschaften, eine sehr gute thermische Beständigkeit und gute Haftungseigenschaften auf. Je nach Art und Menge der Inhaltssstoffe können die mechanischen Eigenschaften von sehr elastisch mit nicht allzu hohem Elastizitätsmodul und hoher Festigkeit bis zu zähelastisch mit sehr hohem Elastizitätsmodul und sehr hoher Festigkeit eingestellt werden. Dadurch ist die Zusammensetzung für eine Vielzahl von Anwendungen geeigent.

Die Zusammensetzung ist besonders geeignet für die Verwendung als Klebstoff, Dichtstoff, Beschichtung, Vergussmasse oder Matrixharz für Bau- und Industrieanwendungen.
Als Klebstoff ist die Zusammensetzung insbesondere geeignet für das strukturelle Kleben in der Bau- oder Fertigungsindustrie, insbesondere als Montageklebstoff, Verankerungsklebstoff, Karrosserieklebstoff, Elementklebstoff für beispielsweise Brücken, Sandwichelementklebstoff, Fassadenelementklebstoff, Verstärkungsklebstoff oder Halbschalenklebstoff für Rotorblätter.
Als Dichtstoff ist die Zusammensetzung insbesondere geeignet für das Abdichten von Fugen, Spalten, Nahtstellen oder Lücken aller Art, insbesondere in der Bau- und Fertigungsindustrie.
Als Beschichtung ist die Zusammensetzung insbesondere geeignet als Belag, Beschichtung, Anstrich, Lack, Versiegelung, Grundierung oder Primer für Bau- und Industrieanwendungen, insbesondere als Bodenbeschichtung für Innenräume oder im Aussenbereich für Balkone, Terrassen, Parkdecks, Brücken oder Dächer, oder als Schutzbeschichtung für Beton, Zement, Metalle, Kunststoffe oder Holz. Dabei kann auf eine solche Beschichtung nach deren Applikation und - zumindest teilweisen - Aushärtung eine weitere Beschichtung, ein weiterer Belag oder ein weiterer Anstrich appliziert werden, wobei es sich bei dieser weiteren Schicht ebenfalls um eine erfindungsgemässe Zusammensetzung oder um ein anderes Material handeln kann, insbesondere um eine Epoxidharz-Beschichtung oder Polyurethan- oder Polyharnstoff-Beschichtung.
Als Vergussmasse ist die Zusammensetzung insbesondere geeignet als Elektrovergussmasse.
Als Matrixharz ist die Zusammensetzung insbesondere geeignet als Faserverbundmatrix für Faserverbundwerkstoffe (Composites) wie CFK oder GFK.

Insbesondere geeignet ist die Zusammensetzung für die Verwendung als Klebstoff und/oder Dichtstoff oder als Beschichtung.

Dabei eignet sich die Zusammensetzung besonders zum Verkleben, Abdichten oder Beschichten von folgenden Substraten:
- Glas, Glaskeramik, Siebdruckkeramik, Beton, Mörtel, Backstein, Ziegel, Gips, Natursteine wie Granit oder Marmor, oder Glasmineralfasermatten;
- Metalle oder Legierungen wie Aluminium, Eisen, Stahl oder Buntmetalle, oder oberflächenveredelte Metalle oder Legierungen wie verzinkte oder verchromte Metalle;
- Leder, Textilien, Papier, Holz, mit Harzen, beispielsweise Phenol-, Melamin- oder Epoxidharzen, gebundene Holzwerkstoffe, Harz-Textil-Verbundwerkstoffe oder weitere sogenannte Polymer-Composites;
- Kunststoffe, insbesondere Hart- oder Weich-PVC, ABS, Polycarbonat (PC), Polyamid (PA), Polyester, PMMA, Epoxidharze, PUR, POM, PO, PE, PP, EPM oder EPDM, wobei die Kunststoffe gegebenenfalls mittels Plasma, Corona oder Flammen oberflächenbehandelt sind;
- Faserverstärkte Kunststoffe, wie Kohlefaser-verstärkte Kunststoffe (CFK), Glasfaser-verstärkte Kunststoffe (GFK) oder Sheet Moulding Compounds (SMC);
- beschichtete Substrate, wie pulverbeschichtete Metalle oder Legierungen;
- Farben oder Lacke, insbesondere Automobildecklacke.
Die Substrate können bei Bedarf vor dem Applizieren der Zusammensetzung vorbehandelt werden. Derartige Vorbehandlungen umfassen insbesondere physikalische und/oder chemische Reinigungsverfahren, beispielsweise Schleifen, Sandstrahlen, Kugelstrahlen, Bürsten und/oder Abblasen, sowie weiterhin Behandeln mit Reinigern oder Lösemitteln oder das Aufbringen eines Haftvermittlers, einer Haftvermittlerlösung oder eines Primers.

Aus der Verwendung als Klebstoff und/oder Dichtstoff oder Beschichtung entsteht ein Artikel, der mit der Zusammensetzung verklebt und/oder abgedichtet oder beschichtet ist. Der Artikel enthält also eine zumindest teilweise ausgehärtete Zusammensetzung, wie vorgängig beschrieben.
Der Artikel ist insbesondere ein Haus, ein Badezimmer, eine Küche, ein Dach, ein Balkon, eine Terrasse, ein Parkdeck, eine Brücke, ein Tunnel, eine Strasse, ein Sandwichelement einer Leichtbaustruktur, ein Solarpanel wie Photovoltaik- oder Solarthermie-Module, eine Glasfassade, ein Fenster, eine Scheibe, ein Spiegel, eine Wanne, eine Weissware, ein Haushaltsapparat, ein Geschirrspüler, eine Waschmaschine, ein Backofen, ein Rotorblatt einer Windkraftanlage, ein Automobil, ein Bus, ein Lastkraftwagen, ein Schienenfahrzeug, ein Schiff, ein Flugzeug, ein Helikopter, oder ein Scheinwerfer; oder ein Anbauteil eines solchen Artikels.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.
"AHEW" steht für das Aminwasserstoff-Equivalentgewicht.
"EEW" steht für das Epoxid-Equivalentgewicht.
Als "Normklima" wird eine Temperatur von 23±1 °C und eine relative Luftfeuchtigkeit von 50±5% bezeichnet. "NK" steht für "Normklima".

### Beschreibung der Messmethoden:

Die **Viskosität** wurde auf einem thermostatisierten Kegel-Platten-Viskosimeter Rheotec RC30 (Kegeldurchmesser 50 mm, Kegelwinkel 1°, Kegelspitze-Platten-Abstand 0.05 mm, Scherrate 10 U/min) gemessen.
Die **Aminzahl** wurde durch Titration bestimmt (mit 0.1N HClO₄ in Essigsäure gegen Kristallviolett).

### Verwendetes Silangruppen-haltiges Polymer:

### STP Polymer-1:

Unter Feuchtigkeitsausschluss wurden 1000 g Polyol Acclaim® 12200 (von Bayer; low monol Polyoxypropylendiol, OH-Zahl 11.0 mg KOH/g, Wassergehalt ca. 0.02 Gew.-%), 43.6 g Isophorondiisocyanat (Vestanat® IPDI von Evonik Industries), 126.4 g Diisodecylphthalat und 0.12 g Dibutylzinndilaurat unter stetigem Rühren auf 90°C aufgeheizt und auf dieser Temperatur belassen, bis der titrimetrisch bestimmte Gehalt an freien Isocyanatgruppen einen Wert von 0.63 Gew.-% erreicht hatte. Anschliessend wurden 62.3 g N-(3-Trimethoxysilylpropyl)aminobernsteinsäurediethylester eingemischt und die Mischung bei 90°C solange gerührt, bis mittels FT-IR-Spektroskopie kein freies Isocyanat mehr nachgewiesen wurde. Das silanfunktionelle Polymer wurde auf Raumtemperatur abgekühlt und unter Ausschluss von Feuchtigkeit aufbewahrt. Es war bei Raumtemperatur flüssig und wies eine Viskosität bei 20 °C von 99 Pa·s auf. Das STP Polymer-1 enthält 10 Gewichts-% Weichmacher (Diisodecylphthalat).

### Verwendetes Epoxidharz:

### Araldite® GY 250:

Bisphenol-A-Diglycidylether, EEW 187.5 g/Eq (von Huntsman)

### Verwendete Amine der Formel (I)

### N-Benzyl-1,2-propandiamin:

In einem Rundkolben wurden 444.8 g (6 mol) 1,2-Propandiamin unter Stickstoffatmosphäre bei Raumtemperatur vorgelegt. Unter gutem Rühren wurde langsam eine Lösung aus 212.2 g (2 mol) Benzaldehyd in 1'500 ml Isopropanol dazugetropft und 2 Stunden nachgerührt. Die Reaktionsmischung wurde anschliessend bei einem Wasserstoff-Druck von 90 bar, einer Temperatur von 85 °C und einem Fluss von 5 ml/min auf einer kontinuierlich arbeitenden Hydrierapparatur mit Pd/C-Festbettkatalysator hydriert. Zur Reaktionskontrolle wurde mittels IR-Spektroskopie überprüft, ob die Iminbande bei ca. 1665 cm⁻¹ verschwunden war. Darauf wurde die hydrierte Lösung am Rotationsverdampfer bei 65 °C eingeengt, wobei unreagiertes 1,2-Propandiamin und Isopropanol entfernt wurden. Es wurde eine klare, leicht gelbliche Flüssigkeit erhalten. Davon wurden 300 g bei 80 °C unter Vakuum destilliert, wobei 237.5 g Destillat bei einer Dampftemperatur von 60 bis 63 °C und 0.08 bis 0.09 bar aufgefangen wurden. Erhalten wurde eine farblose Flüssigkeit mit einer Aminzahl von 682 mg KOH/g, welche gemäss ¹H-NMR eine Mischung aus N¹-Benzyl-1,2-propandiamin und N²-Benzyl-1,2-propandiamin im Verhältnis von ca. 2/1 darstellte und eine GC-Reinheit von >97% aufwies.

### Gaskamine® 240:

Styrolisiertes 1,3-Bis(aminomethyl)benzol; AHEW 103 g/Eq (von Mitsubishi Gas Chemical).

### Verwendete weitere Substanzen:

- DBTDL 10%:: Dibutylzinn(IV)dilaurat, 10 Gewichts-% in Diisodecylphthalat
- Silquest® A-1120:: N-(2-Aminoethyl)-3-aminopropyltrimethoxysilan, AHEW 74.1 g/Eq (von Momentive)
- Ancamine® K54:: 2,4,6-Tris(dimethylaminomethyl)phenol (von Air Products)
- Jeffamine® D-230:: Polyetherdiamin mit mittlerem Molekulargewicht 230 g/mol, AHEW 60 g/Eq (von Huntsman)
- Jeffamine® D-400:: Polyetherdiamin mit mittlerem Molekulargewicht 430 g/mol, AHEW 115 g/Eq (von Huntsman)
- Vestamin® TMD:: 2,2(4),4-Trimethylhexamethylendiamin, AHEW 39.6 g/Eq (von Evonik)
- Vestamin® IPD:: 3-Aminomethyl-3,5,5-trimethylcyclohexylamin, AHEW 42.6 g/Eq (von Evonik)
- EP-Addukt 1:: Umsetzungsprodukt aus 1,5-Diamino-2-methylpentan und Araldite® DY-K, hergestellt wie nachfolgend beschrieben; AHEW 106.5 g/Eq

Das **EP-Addukt 1** wurde hergestellt, indem 4.65 kg 1,5-Diamino-2-methylpentan (Dytek® A von Invista) unter Stickstoffatmosphäre vorgelegt, auf 70 °C erwärmt und dann unter gutem Rühren langsam mit 1.83 kg Araldite® DY-K versetzt wurde, wobei die Temperatur der Reaktionsmischung 70 bis 80 °C betrug. Nach 1 Stunde bei 80°C wurde die Reaktionsmischung abgekühlt und 1,5-Diamino-2-methylpentan und weitere flüchtige Bestandteile destillativ mittels Dünnschichtverdampfer (0.5-1 mbar, Manteltemperatur 160 °C) entfernt.

### Herstellung von zweikomponentigen Zusammensetzungen:

Für jedes Beispiel wurden die in den Tabellen 1 bis 3 angegebenen Inhaltsstoffe in den angegebenen Mengen (in Gewichtsteilen) der Komponente-1 mittels eines Zentrifugalmischers (SpeedMixer™ DAC 150, FlackTek Inc.) vermischt und unter Ausschluss von Feuchtigkeit aufbewahrt.
Ebenso wurden die in den Tabellen 1 bis 3 angegebenen Inhaltsstoffe der Komponente-2 verarbeitet und aufbewahrt.
Anschliessend wurden die beiden Komponenten jeder Zusammensetzung mittels des Zentrifugalmischers zu einer homogenen Flüssigkeit verarbeitet und diese unverzüglich folgendermassen geprüft:
1 Minute nach dem Vermischen wurde die **Viskosität** bei 20°C bestimmt.
Zur Messung der Zeit bis zur Klebefreiheit, abgekürzt als **"TFT",** wurde ein kleiner Teil der vermischten raumtemperaturwarmen Zusammensetzung in einer Schichtdicke von ca. 3 mm auf Pappkarton aufgetragen und im Normklima die Zeit bestimmt, die es dauerte, bis beim leichten Antippen der Oberfläche der Zusammensetzung mittels einer Pipette aus LDPE erstmals keine Rückstände auf der Pipette mehr zurückblieben.
Die **Zugfestigkeit,** die **Bruchdehnung** und der Elastizitätsmodul bei 0.5 bis 5.0 % Dehnung (**E-Modul 5%**) wurden nach DIN EN 53504 bestimmt an Hanteln mit einer Länge von 75 mm, bei einer Steglänge von 30 mm und einer Stegbreite von 4 mm, welche durch Ausstanzen aus Filmen von ca. 2 mm Dicke der bei den jeweils angegebenen Bedingungen ausgehärteten Zusammensetzung hergestellt wurden. Die in den Tabellen mit "10d NK" bzw. "14d NK" bezeichneten Werte wurden bestimmt nach einer Lagerzeit von 10 bzw. 14 Tagen im Normklima. Die mit "+2d 80°C" bezeichneten Werte wurden bestimmt an Hanteln, welche 10 Tage im Normklima und anschliessend während 2 Tagen in einem Umluftofen bei 80 °C gelagert waren. Für die Beispiele ***Z-1*** bis ***Z-7*** und ***Ref-1*** bis ***Ref-4*** wurden diese Werte mit einer Zuggeschwindigkeit von 200 mm/min bestimmt. Für die Beispiele ***Z-8*** bis ***Z-10*** und ***Ref-5*** bis ***Ref-8*** wurden sie mit einer Zuggeschwindigkeit von 10 mm/min bestimmt.
Die **Shore A-Härte** wurde bestimmt nach DIN 53505 an während 14 Tagen im Normklima ausgehärteten Prüfkörpern. Dabei wurde der Wert jeweils oben, an der der Luft zugewandten Seite des Prüfkörpers, bestimmt. Zusätzlich wurde der Prüfkörper umgedreht und ebenfalls unten, an der der Luft nicht ausgesetzten Seite, bestimmt. Die beiden Werte sind in der Tabelle 2 angegeben als "oben/unten". Dabei ist ein möglichst ähnlicher Wert für "oben" und "unten" ein Zeichen für eine vollständige und ungestörte Aushärtung.
Nach 14 Tagen im NK wurde von allen Filmen der **Aspekt** visuell beurteilt. Alle Filme waren nach der Aushärtung absolut nichtklebrig, frei von Blasen, und entweder intransparent weiss, oder opak bis halb transparent (bezeichnet als "opak - transparent"), oder fast transparent, oder transparent, jeweils mit einer glänzenden bis seidenmatten Oberfläche. Das Beispiel ***Ref-4*** zeigte Schlieren auf der Oberfläche.
Die Resultate sind in den Tabellen 1 bis 3 angegeben.

Die Beispiele ***Z-1*** bis ***Z-10*** sind erfindungsgemässe Zusammensetzungen. Die Beispiele ***Ref-1*** bis ***Ref-8*** sind Vergleichsbeispiele.

**Tabelle 1: Zusammensetzung und Eigenschaften der Beispiele Z-1 bis Z-3 und der Vergleichsbeispiele Ref-1bis Ref-2. "Weiterreissf." steht für "Weiterreissfestigkeit"**

| **Beispiel** | | ***Z-1*** | ***Z-2*** | ***Z-3*** | ***Ref-1*** | ***Ref-2*** |
|---|---|---|---|---|---|---|
| **Komponente-1** : | | | | | | |
| | STP Polymer-1 | 53.0 | 53.0 | 53.0 | 53.0 | 53.0 |
| | Araldite® GY 250 | 38.0 | 38.0 | 38.0 | 38.0 | 38.0 |
| | DBTDL 10% | 2.0 | 2.0 | 2.0 | 2.0 | 2.0 |
| | Dioctyladipat | 7.0 | 7.0 | 7.0 | 7.0 | 7.0 |

| **Komponente-2**: | | | | | | |
|---|---|---|---|---|---|---|
| | Silquest® A-1120 | 2.5 | 2.5 | 2.5 | 2.5 | 2.5 |
| | N-Benzyl-1,2-propandiamin | 10.4 | 7.0 | - | - | - |
| | Gaskamine® 240 | - | - | 19.5 | - | - |
| | Jeffamine® D-230 | - | - | - | 11.4 | - |
| | Jeffamine® D-400 | - | 7.0 | - | - | 21.8 |
| | Ancamine® K54 | 1.2 | 1.2 | 1.2 | 1.2 | 1.2 |
| | Viskosität [Pa·s] | 11.7 | 10.8 | 13.8 | 12.1 | 7.1 |
| | TFT [min.] | 35 | 30 | 35 | 40 | 35 |
| | Aspekt | fast transparent | opak - transparent | transparent | fast transparent | transparent |

| **10d NK:** | | | | | | |
|---|---|---|---|---|---|---|
| | Zugfestigkeit [MPa] | 8.7 | 9.8 | 7.4 | 6.9 | 6.0 |
| | Bruchdehnung | 140% | 139% | 93% | 103% | 71% |
| | E-Modul 5% [MPa] | 48.4 | 26.0 | 66.5 | 39.1 | 40.8 |
| | Weiterreissf. [N/mm] | 20.2 | 14.1 | 21.2 | 13.5 | 14.3 |

**Tabelle 2: Zusammensetzung und Eigenschaften der Beispiele Z-4 bis Z-7 und der Vergleichsbeispiele Ref-3 bis Ref-4. "Weiterreissf." steht für "Weiterreissfestigkeit" ; "transp." steht für "transparent"**

| **Beispiel** | | ***Z-4*** | ***Z-5*** | ***Ref-3*** | ***Z-6*** | ***Z-7*** | ***Ref-4*** |
|---|---|---|---|---|---|---|---|
| **Komponente-1** : | | | | | | | |
| | STP Polymer-1 | 50.0 | 50.0 | 50.0 | 40.0 | 40.0 | 40.0 |
| | Araldite® GY 250 | 48.0 | 48.0 | 48.0 | 48.0 | 48.0 | 48.0 |
| | DBTDL 10% | 2.0 | 2.0 | 2.0 | 2.0 | 2.0 | 2.0 |
| | Dioctyladipat | - | - | - | 5.0 | 5.0 | 5.0 |
| | Vinyltrimethoxysilan | - | - | - | 5.0 | 5.0 | 5.0 |

| **Komponente-2**: | | | | | | | |
|---|---|---|---|---|---|---|---|
| | Silquest® A-1120 | 0.3 | 0.6 | 0.6 | 0.3 | 0.6 | 0.6 |
| | N-Benzyl-1,2-propandiamin | 15.3 | - | - | 15.3 | - | - |
| | Gaskamine® 240 | - | 28.7 | - | - | 28.7 | - |
| | Jeffamine® D-400 | - | - | 23.9 | - | - | 23.9 |
| | Vestamin® TMD | - | - | 2.8 | - | - | 2.8 |
| | Ancamine® K54 | 0.4 | 0.8 | 0.7 | 0.4 | 0.8 | 0.7 |
| | Viskosität [Pa·s] | 34.4 | 37.7 | 24.4 | 7.9 | 9.5 | 6.4 |
| | TFT [min.] | 40 | 110 | 40 | 85 | 100 | 40 |
| | Aspekt | opak - transp. | opak - transp. | opak - transp. | opak - transp. | opak - transp. | opak - transp., Schlieren |

| **14d NK:** | | | | | | | |
|---|---|---|---|---|---|---|---|
| | Zugfestigkeit [MPa] | 4.9 | 7.4 | 6.7 | 4.2 | 6.6 | 6.1 |
| | Bruchdehnung | 120% | 81% | 80% | 80% | 67% | 61% |
| | E-Modul 5% [MPa] | 5.6 | 7.9 | 13.2 | 8.3 | 11.7 | 10.3 |
| | Weiterreissf. [N/mm] | 5.0 | 5.2 | 6.5 | 6.2 | 6.0 | 8.3 |
| | Shore A oben/unten | 78/75 | 80/79 | 88/78 | 75/74 | 82/80 | 81/74 |

**Tabelle 3: Zusammensetzung und Eigenschaften der Beispiele Z-8 bis Z-10 und der Vergleichsbeispiele Ref-5 bis Ref-8. "intransp." steht für "intransparent" "transp." steht für "transparent"**

| **Beispiel** | | ***Z-8*** | ***Z-9*** | ***Z-10*** | ***Ref-5*** | ***Ref-6*** | ***Ref-7*** | ***Ref-8*** |
|---|---|---|---|---|---|---|---|---|
| **Komponente-1** : | | | | | | | | |
| | STP Polymer-1 | 32.8 | 32.8 | 32.8 | 32.8 | 32.8 | 32.8 | 32.8 |
| | Araldite® GY 250 | 66.5 | 66.5 | 66.5 | 66.5 | 66.5 | 66.5 | 66.5 |
| | DBTDL 10% | 0.7 | 0.7 | 0.7 | 0.7 | 0.7 | 0.7 | 0.7 |

| **Komponente-2**: | | | | | | | | |
|---|---|---|---|---|---|---|---|---|
| | Silquest® A-1120 | 5.0 | 5.0 | 5.0 | 5.0 | 5.0 | 5.0 | 5.0 |
| | N-Benzyl-1,2-propandiamin | 17.0 | 8.5 | - | - | - | - | - |
| | Gaskamine® 240 | - | - | 33.0 | - | - | - | - |
| | Jeffamine® D-230 | - | 9.5 | - | 19.0 | - | - | - |
| | Vestamin® TMD | - | - | - | | 13.0 | - | - |
| | Vestamin® IPD | - | - | - | - | - | 14.0 | - |
| | EP-Addukt 1 | - | - | - | - | - | - | 34.0 |
| | Viskosität [Pa·s] | 6.6 | 6.3 | 8.7 | 5.6 | 7.4 | 11.3 | 21.4 |
| | TFT [min.] | 140 | 120 | 105 | 120 | 91 | 100 | 90 |
| | Aspekt | intransp. weiss | opak - transp. | opak - transp. | opak - transp. | intransp. weiss | intransp. weiss | intransp. weiss |

| **10d NK** | | | | | | | | |
|---|---|---|---|---|---|---|---|---|
| | Zugfestigkeit [MPa] | 10.3 | 11.7 | 14.0 | 11.3 | 3.6 | 4.8 | 4.9 |
| | Bruchdehnung | 8% | 10% | 12% | 9% | 8% | 9% | 66% |
| | E-Modul 5% [MPa] | 188 | 186 | 149 | 183 | 47 | 58 | 21 |

| **+2d 80°** | | | | | | | | |
|---|---|---|---|---|---|---|---|---|
| | Zugfestigkeit [MPa] | 11.6 | 15.2 | 18.2 | 14.2 | 3.6 | 4.9 | 4.0 |
| | Bruchdehnung | 6% | 8% | 10% | 14% | 6% | 5% | 16% |
| | E-Modul 5% [MPa] | 206 | 243 | 231 | 209 | 59 | 86 | 46 |

## Patentansprüche

1. Zusammensetzung umfassend
- mindestens ein Silangruppen-haltiges Polymer,
- mindestens ein Epoxidharz und
- mindestens ein Amin der Formel (I), 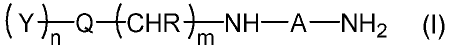 wobei
A für einen Alkylen-Rest mit 2 bis 15 C-Atomen, welcher gegebenenfalls ein oder mehrere Stickstoffatome enthält, steht,
R unabhängig voneinander für einen Wasserstoff- oder Methyl- oder Phenyl-Rest steht,
Q für einen fünf-, sechs- oder siebengliedrigen, im Ring gegebenenfalls ein Sauerstoff-, Schwefel- oder Stickstoffatom aufweisenden Cycloalkyl- oder Aryl-Rest mit 4 bis 7 C-Atomen steht,
Y für gleiche oder verschiedene Reste ausgewählt aus der Gruppe bestehend aus Alkyl, Alkoxy und Dialkylamino mit 1 bis 18 C-Atomen steht,
m für 1 oder 2 steht und
n für 0 oder 1 oder 2 oder 3 steht.

2. Zusammensetzung gemäss Anspruch 1, **dadurch gekennzeichnet, dass** das Silangruppen-haltige Polymer ein Silangruppen-haltiger Polyether ist.

3. Zusammensetzung gemäss einem der Ansprüche 1 oder 2, **dadurch gekennzeichnet, dass** sie einen Gehalt an Silangruppen-haltigem Polymer im Bereich von 5 bis 80 Gewichts-% aufweist.

4. Zusammensetzung gemäss einem der Ansprüche 1 bis 3, **dadurch gekennzeichnet, dass** das Epoxidharz ein Flüssigharz auf der Basis eines Bisphenol-A-, Bisphenol-F- oder Bisphenol-A/F-Diglycidylethers ist.

5. Zusammensetzung gemäss einem der Ansprüche 1 bis 4, **dadurch gekennzeichnet, dass** sie einen Gehalt an Epoxidharz im Bereich von 15 bis 70 Gewichts-% aufweist.

6. Zusammensetzung gemäss einem der Ansprüche 1 bis 5, **dadurch gekennzeichnet, dass** A für 1,2-Propylen, R für einen Wasserstoff-Rest, Q für einen Phenyl-Rest, m für 1 und n für 0 stehen.

7. Zusammensetzung gemäss einem der Ansprüche 1 bis 5, **dadurch gekennzeichnet, dass** A für 1,3-Phenylen-bis(methylen), R für einen Wasserstoff-Rest, Q für einen Phenyl-Rest, m für 1 und n für 0 stehen.

8. Zusammensetzung gemäss einem der Ansprüche 1 bis 5, **dadurch gekennzeichnet, dass** A für 1,3-Phenylen-bis(methylen), R jeweils für einen Wasserstoff-Rest, Q für einen Phenyl-Rest, m für 2 und n für 0 stehen.

9. Zusammensetzung gemäss einem der Ansprüche 1 bis 8, **dadurch gekennzeichnet, dass** sie einen Gehalt an Amin der Formel (I) im Bereich von 1 bis 35 Gewichts-% aufweist.

10. Zusammensetzung gemäss einem der Ansprüche 1 bis 9, **dadurch gekennzeichnet, dass** sie zusätzlich mindestens ein Aminosilan enthält.

11. Zusammensetzung gemäss einem der Ansprüche 1 bis 10, **dadurch gekennzeichnet, dass** sie eine zweikomponentige Zusammensetzung bestehend aus einer ersten und einer zweiten Komponente, welche voneinander getrennt herstellt, verpackt und gelagert werden, ist, wobei das Amin der Formel (I) nicht in der gleichen Komponente wie das Epoxidharz vorliegt.

12. Zusammensetzung gemäss einem der Ansprüche 1 bis 11, **dadurch gekennzeichnet, dass** sie zusätzlich mindestens ein weiteres Amin, das nicht der Formel (I) entspricht, und/oder mindestens ein Beschleuniger enthält.

13. Ausgehärtete Zusammensetzung erhalten aus der Zusammensetzung gemäss einem der Ansprüche 1 bis 12 durch Vermischen aller Inhaltsstoffe bzw. Komponenten der Zusammensetzung, der Applikation der vermischten Zusammensetzung und deren Aushärtung.

14. Verwendung der Zusammensetzung gemäss einem der Ansprüche 1 bis 12 als Klebstoff und/oder Dichtstoff oder als Beschichtung.

15. Verklebter und/oder abgedichteter oder beschichteter Artikel erhalten aus einer Verwendung gemäss Anspruch 14.

## Claims

1. A composition comprising
- at least one polymer containing silane groups,
- at least one epoxy resin, and
- at least one amine of the formula (I) 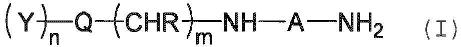 where
A is an alkylene radical having 2 to 15 carbon atoms which optionally contains one or more nitrogen atoms,
each R independently is a hydrogen or methyl or phenyl radical,
Q is a five-, six- or seven-membered cycloalkyl or aryl radical optionally having an oxygen, sulfur or nitrogen atom in the ring and having 4 to 7 carbon atoms,
Y represents identical or different radicals selected from the group consisting of alkyl, alkoxy and dialkylamino having 1 to 18 carbon atoms,
m is 1 or 2, and
n is 0 or 1 or 2 or 3.

2. The composition as claimed in claim 1, **characterized in that** the polymer containing silane groups is a polyether containing silane groups.

3. The composition as claimed in either of claims 1 and 2, **characterized in that** it has a content of polymer containing silane groups in the range from 5 to 80 weight%.

4. The composition as claimed in any of claims 1 to 3, **characterized in that** the epoxy resin is a liquid resin based on a diglycidyl ether of bisphenol A, of bisphenol F or of bisphenol A/F.

5. The composition as claimed in any of claims 1 to 4, **characterized in that** it has an epoxy resin content in the range from 15 to 70 weight%.

6. The composition as claimed in any of claims 1 to 5, **characterized in that** A is 1,2-propylene, R is a hydrogen radical, Q is a phenyl radical, m is 1 and n is 0.

7. The composition as claimed in any of claims 1 to 5, **characterized in that** A is 1,3-phenylenebis(methylene), R is a hydrogen radical, Q is a phenyl radical, m is 1 and n is 0.

8. The composition as claimed in any of claims 1 to 5, **characterized in that** A is 1,3-phenylenebis(methylene), R in each case is a hydrogen radical, Q is a phenyl radical, m is 2 and n is 0.

9. The composition as claimed in any of claims 1 to 8, **characterized in that** it has a content of amine of the formula (I) in the range from 1 to 35 weight%.

10. The composition as claimed in any of claims 1 to 9, **characterized in that** it additionally comprises at least one aminosilane.

11. The composition as claimed in any of claims 1 to 10, **characterized in that** it is a two-component composition consisting of a first component and a second component, which are produced, packed and stored separately from one another, the amine of the formula (I) not being present in the same component as the epoxy resin.

12. The composition as claimed in any of claims 1 to 11, **characterized in that** it additionally comprises at least one further amine, which does not conform to the formula (I), and/or at least one accelerator.

13. A cured composition obtained from the composition as claimed in any of claims 1 to 12 by mixing all of the ingredients and/or components of the composition, applying the mixed composition and curing the applied composition.

14. The use of the composition as claimed in any of claims 1 to 12 as adhesive and/or sealant or as coating.

15. A bonded and/or sealed or coated article obtained from a use as claimed in claim 14.

## Revendications

1. Composition, comprenant :
- au moins un polymère contenant des groupes silane,
- au moins une résine époxyde et
- au moins une amine de la formule (I) : 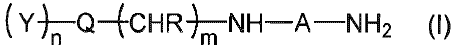 dans laquelle
A représente un radical alkylène de 2 à 15 atomes C, qui contient éventuellement un ou plusieurs atomes d'azote,
les R représentent indépendamment les uns des autres un radical hydrogène ou méthyle ou phényle,
Q représente un radical cycloalkyle ou aryle à cinq, six ou sept chaînons, comprenant éventuellement un atome d'oxygène, de soufre ou d'azote dans le cycle, de 4 à 7 atomes C,
les Y représentent des radicaux identiques ou différents choisis dans le groupe constitué par alkyle, alcoxy et dialkylamino de 1 à 18 atomes C,
m représente 1 ou 2, et
n représente 0 ou 1 ou 2 ou 3.

2. Composition selon la revendication 1, **caractérisée en ce que** le polymère contenant des groupes silane est un polyéther contenant des groupes silane.

3. Composition selon l'une quelconque des revendications 1 ou 2, **caractérisée en ce qu'**elle présente une teneur en polymère contenant des groupes silane dans la plage allant de 5 à 80 % en poids.

4. Composition selon l'une quelconque des revendications 1 à 3, **caractérisée en ce que** la résine époxyde est une résine liquide à base d'un éther diglycidylique de bisphénol A, de bisphénol F ou de bisphénol A/F.

5. Composition selon l'une quelconque des revendications 1 à 4, **caractérisée en ce qu'**elle présente une teneur en résine époxyde dans la plage allant de 15 à 70 % en poids.

6. Composition selon l'une quelconque des revendications 1 à 5, **caractérisée en ce que** A représente 1,2-propylène, R représente un radical hydrogène, Q représente un radical phényle, m représente 1 et n représente 0.

7. Composition selon l'une quelconque des revendications 1 à 5, **caractérisée en ce que** A représente 1,3-phénylène-bis(méthylène), R représente un radical hydrogène, Q représente un radical phényle, m représente 1 et n représente 0.

8. Composition selon l'une quelconque des revendications 1 à 5, **caractérisée en ce que** A représente 1,3-phénylène-bis(méthylène), R représente à chaque fois un radical hydrogène, Q représente un radical phényle, m représente 2 et n représente 0.

9. Composition selon l'une quelconque des revendications 1 à 8, **caractérisée en ce qu'**elle présente une teneur en amine de la formule (I) dans la plage allant de 1 à 35 % en poids.

10. Composition selon l'une quelconque des revendications 1 à 9, **caractérisée en ce qu'**elle contient en outre au moins un aminosilane.

11. Composition selon l'une quelconque des revendications 1 à 10, **caractérisée en ce qu'**il s'agit d'une composition bicomposante constituée par un premier et un deuxième composant, qui sont fabriqués, emballés et stockés séparément l'un de l'autre, l'amine de la formule (I) n'étant pas présente dans le même composant que la résine époxyde.

12. Composition selon l'une quelconque des revendications 1 à 11, **caractérisée en ce qu'**elle contient en outre au moins une amine supplémentaire, qui ne correspond pas à la formule (I), et/ou au moins un accélérateur.

13. Composition durcie obtenue à partir de la composition selon l'une quelconque des revendications 1 à 12 par mélange de tous les constituants ou composants de la composition, application de la composition mélangée et durcissement de celle-ci.

14. Utilisation de la composition selon l'une quelconque des revendications 1 à 12 en tant qu'adhésif et/ou agent d'étanchéité ou en tant que revêtement.

15. Article collé et/ou étanchéifié ou revêtu obtenu à partir d'une utilisation selon la revendication 14.
